# EUROPEAN PATENT APPLICATION

(11) **EP 4 489 468 A1**
(43) Date of publication of application: **08.01.2025**
(21) Application number: 23762962.1
(22) Date of filing: 02.03.2023
(51) Int. Cl.: H04W 24/08, H04W 28/24

(54) **QOS CONTROL METHOD AND COMMUNICATION DEVICE**

(30) Priority: 04.03.2022 CN 202210210309
(71) Applicant: VIVO MOBILE COMMUNICATION CO., LTD., Dongguan, Guangdong 523863 (CN)
(72) Inventor: KE, Xiaowan, Dongguan, Guangdong 523863 (CN)
(74) Representative: Shieldmark
(86) International application number: PCT/CN2023/079306
(87) International publication number: WO 2023/165564

(57) **Abstract**

Embodiments of the present application provide a QoS control method and a communication device. The QoS control method applied to a first communication device includes: the first communication device obtains first information; and the first communication device performs a first operation according to the first information, where the first information includes at least one of the following: delay monitoring configuration information; first QoS configuration information; and first indication information; performing the first operation includes at least one of the following: determining at least one of the following: a third round trip delay budget, a third uplink delay budget, and a third downlink delay budget; determining a first round trip delay budget as one of the following: a value of twice a delay budget of a data tunnel, the first round trip delay budget in the first QoS configuration information, and a sum of a first uplink delay budget and a first downlink delay budget; performing a delay monitoring operation; and performing delay guarantee according to a delay monitoring result and/or the first QoS configuration information.

## Description

### CROSS-REFERENCE TO RELATED APPLICATIONS

This application claims priority to Chinese Patent Application No. 2022102103098, filed on March 4, 2022 and entitled "QoS CONTROL METHOD AND COMMUNICATION DEVICE", which is incorporated herein by reference in its entirety.

### TECHNICAL FIELD

Embodiments of the present application relate to the field of communication technologies, and in particular, to a QoS control method and a communication device.

### BACKGROUND

A round trip delay guarantee requirement exists in some services (such as an EXtended Reality (XR) media service and a cloud gaming service).

Essentially, this is caused by an uplink first downlink delay imbalance of a service. For example, in a gaming service, an uplink packet is relatively small, and is usually an action packet of a user. Picture flutter can only be avoided and a delay budget can be reduced by transmitting the uplink packet to a server as soon as possible. A downlink data packet is relatively large, and is usually a background picture and a status packet of a game, and a delay budget requirement may be relatively high.

How to perform delay scheduling/control to ensure a round trip delay is a problem to be solved in the present application.

### SUMMARY

Embodiments of the present application provide a QoS control method and a communication device, which are configured to resolve a problem about how to guarantee a round trip delay.

According to a first aspect, a QoS control method is provided, applied to a first communication device. The method includes:
obtaining, by a first communication device, first information; and
performing, by the first communication device, a first operation according to the first information.

The first information includes at least one of the following:
delay monitoring configuration information;
first QoS configuration information; and
first indication information, the first indication information being used to indicate one of the following: performing delay guarantee according to a delay monitoring result and/or the first QoS configuration information; and performing delay guarantee according to the delay monitoring result and/or a third round trip delay budget.

The performing a first operation includes at least one of the following:
determining at least one of the following: the third round trip delay budget, a third uplink delay budget, and a third downlink delay budget;
determining a first round trip delay budget as one of the following: a value of twice a delay budget of a data tunnel, the first round trip delay budget in the first QoS configuration information, and a sum of a first uplink delay budget and a first downlink delay budget;
performing a delay monitoring operation; and
performing delay guarantee according to the delay monitoring result and/or the first QoS configuration information.

The first QoS configuration information includes at least one of the following:
a first round trip delay budget, a first uplink delay budget, and a first downlink delay budget;
the third round trip delay budget, the third uplink delay budget, and the third downlink delay budget;
the delay budget of the data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate: a round trip delay being not able to exceed a round trip delay budget, where
the first round trip delay budget is the round trip delay budget between a terminal and an anchor gateway;
the first uplink delay budget is the uplink delay budget from the terminal to the anchor gateway;
the first downlink delay budget is the downlink delay budget from the anchor gateway to the terminal;
the third uplink delay budget is the uplink delay budget from the terminal to a RAN network element;
the third downlink delay budget is the downlink delay budget from the RAN network element to the terminal; and
the third round trip delay budget is the round trip delay budget between the terminal and the RAN network element.

According to a second aspect, a QoS control method is provided, applied to a second communication device. The method includes:
obtaining, by a second communication device, first information; and
performing, by the second communication device, a second operation according to the first information.

The first information includes at least one of the following:
delay monitoring configuration information;
first QoS configuration information; and
first indication information, the first indication information being used to indicate one of the following: performing delay guarantee according to the delay monitoring result and/or the first QoS configuration information; and performing delay guarantee according to the delay monitoring result and/or a third round trip delay budget.

The second operation includes at least one of the following:
a delay monitoring operation.

The first QoS configuration information includes at least one of the following:
a first round trip delay budget, a first uplink delay budget, and a first downlink delay budget;
the third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate: a round trip delay being not able to exceed a round trip delay budget.

According to a third aspect, a QoS control method is provided, applied to a third communication device. The method includes:
obtaining, by a third communication device, fifth information; and
performing, by the third communication device, a third operation according to the fifth information.

The performing a third operation includes at least one of the following:
determining second information; and
transmitting the second information.

The second information includes at least one of the following: a delay monitoring policy, a first QoS policy, and first indication information;
the first indication information is used to indicate one of the following: performing delay guarantee according to the delay monitoring result and/or the first QoS configuration information; and performing delay guarantee according to the delay monitoring result and/or a third round trip delay budget, where
the fifth information includes at least one of the following: description information of a first service data flow; a delay monitoring requirement; a first QoS requirement, the first QoS requirement being a QoS requirement of the first service data flow, where
the first QoS requirement includes at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay requirement.

According to a fourth aspect, a QoS control method is provided, applied to a fourth communication device. The method includes:
obtaining, by a fourth communication device, second information, the second information including at least one of the following: a delay monitoring requirement or a delay monitoring policy, a first QoS requirement or a first QoS policy, and first indication information;
performing, by the fourth communication device, a fourth operation according to the second information, the performing a fourth operation including at least one of the following:
determining first information;
transmitting the first information, where
the first information includes at least one of the following:
delay monitoring configuration information;
first QoS configuration information; and
the first indication information, the first indication information being used to indicate one of the following: performing delay guarantee according to a delay monitoring result and/or the first QoS configuration information; and performing delay guarantee according to the delay monitoring result and/or a third round trip delay budget.

The first QoS configuration information includes at least one of the following:
a first round trip delay budget, a first uplink delay budget, and a first downlink delay budget;
the third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate: an uplink delay budget being able to be different from a downlink delay budget, or an uplink delay budget being only able to be the same as a downlink delay budget; and
fourth indication information, the fourth indication information being used to indicate: the first round trip delay being not able to exceed the first round trip delay requirement.

The delay monitoring configuration information includes at least one of the following: a delay required to be measured, including at least one of the following: a first uplink delay, a first downlink delay, a first round trip delay, a second uplink delay, a second downlink delay, and a second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

According to a fifth aspect, a QoS control method is provided, applied to a fifth communication device. The method includes:
transmitting, by a fifth communication device, fifth information, the fifth information including at least one of the following: description information of a first service data flow; a delay monitoring requirement; and a first QoS requirement, the first QoS requirement being a QoS requirement of the first service data flow, where
the first QoS requirement includes at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay requirement.

The delay monitoring requirement includes at least one of the following:
a delay required to be measured, including at least one of the following: the first uplink delay, the first downlink delay, the first round trip delay, the second uplink delay, the second downlink delay, and the second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway, the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

According to a sixth aspect, a first communication device is provided. The first communication device includes a processor and a memory. The memory stores a program or instructions capable of running on the processor. The program or the instructions implement steps of the method according to the first aspect when executed by the processor.

According to a seventh aspect, a first communication device is provided, including a processor and a communication interface. The communication interface is configured to obtain first information, and the processor is configured to perform a first operation according to the first information.

According to an eighth aspect, a second communication device is provided. The second communication device includes a processor and a memory. The memory stores a program or instructions capable of running on the processor. The program or the instructions implement steps of the method according to the second aspect when executed by the processor.

According to a ninth aspect, a second communication device is provided, including a processor and a communication interface. The communication interface is configured to obtain first information, and the processor is configured to perform a second operation according to the first information.

According to a tenth aspect, a third communication device is provided. The third communication device includes a processor and a memory. The memory stores a program or instructions capable of running on the processor. The program or the instructions implement steps of the method according to the third aspect when executed by the processor.

According to an eleventh aspect, a third communication device is provided, including a processor and a communication interface. The communication interface is configured to obtain fifth information, and the processor is configured to perform a third operation according to the fifth information.

According to a twelfth aspect, a fourth communication device is provided. The fourth communication device includes a processor and a memory. The memory stores a program or instructions capable of running on the processor. The program or the instructions implement steps of the method according to the fourth aspect when executed by the processor.

According to a thirteenth aspect, a fourth communication device is provided, including a processor and a communication interface. The communication interface is configured to obtain second information, and the processor is configured to perform a fourth operation according to the second information.

According to a fourteenth aspect, a fifth communication device is provided. The fifth communication device includes a processor and a memory. The memory stores a program or instructions capable of running on the processor. The program or the instructions implement steps of the method according to the fifth aspect when executed by the processor.

According to a fifteenth aspect, a fifth communication device is provided, including a processor and a communication interface. The communication interface is configured to transmit fifth information.

According to a sixteenth aspect, a communication system is provided, including: a first communication device, a second communication device, a third communication device, a fourth communication device, and a fifth communication device. The first communication device may be configured to perform steps of the QoS control method according to the first aspect. The second communication device may be configured to perform steps of the QoS control method according to the second aspect. The third communication device may be configured to perform steps of the QoS control method according to the third aspect. The fourth communication device may be configured to perform steps of the QoS control method according to the fourth aspect. The fifth communication device may be configured to perform steps of the QoS control method according to the fifth aspect.

According to a seventeenth aspect, a readable storage medium is provided. The readable storage medium stores a program or instructions thereon. The program or instructions, when executed by a processor, implement steps of the method according to the first aspect, or implement steps of the method according to the second aspect, or implement steps of the method according to the third aspect, or implement steps of the method according to the fourth aspect, or implement steps of the method according to the fifth aspect.

According to an eighteenth aspect, a chip is provided. The chip includes a processor and a communication interface. The communication interface is coupled to the processor. The processor is configured to run a program or instructions to implement steps of the method according to the first aspect, or implement steps of the method according to the second aspect, or implement steps of the method according to the third aspect, or implement steps of the method according to the fourth aspect, or implement steps of the method according to the fifth aspect.

According to a nineteenth aspect, a computer program/program product is provided. The computer program/program product is stored in a storage medium. The computer program/program product is executed by at least one processor to implement steps of the method according to the first aspect, or implement steps of the method according to the second aspect, or implement steps of the method according to the third aspect, or implement steps of the method according to the fourth aspect, or implement steps of the method according to the fifth aspect.

In the embodiments of the present application, the first communication device obtains at least one of the delay monitoring configuration information, the first QoS configuration information, and the first indication information, and determines at least one of the following: a third round trip delay budget, a third uplink delay budget, and a third downlink delay budget; a first round trip delay budget is determined, a delay monitoring operation is performed, and/or delay guarantee is performed according to a delay monitoring result and/or the first QoS configuration information, so that the first communication device may perform delay scheduling/control to guarantee a round trip delay.

### BRIEF DESCRIPTION OF THE DRAWINGS

Various other advantages and benefits become clear to those of ordinary skill in the art by reading the following detailed description of preferred implementations. Accompanying drawings are merely intended to illustrate preferred implementations and are not intended to constitute a limitation on the present application. Throughout the accompanying drawings, the same reference numerals are used to represent the same components. In the accompanying drawings:
FIG. 1 is a schematic architectural diagram of a wireless communication system according to an embodiment of the present application;
FIG. 2 is a first schematic flowchart of a QoS control method according to an embodiment of the present application;
FIG. 3 is a second schematic flowchart of a QoS control method according to an embodiment of the present application;
FIG. 4 is a third schematic flowchart of a QoS control method according to an embodiment of the present application;
FIG. 5 is a fourth schematic flowchart of a QoS control method according to an embodiment of the present application;
FIG. 6 is a fifth schematic flowchart of a QoS control method according to an embodiment of the present application;
FIG. 7a is a first schematic flowchart of interaction in a QoS control method according to an embodiment of the present application;
FIG. 7b is a second schematic flowchart of interaction in a QoS control method according to an embodiment of the present application;
FIG. 8 is a schematic structural diagram of a first communication device according to an embodiment of this application;
FIG. 9 is a schematic structural diagram of a second communication device according to an embodiment of this application;
FIG. 10 is a schematic structural diagram of a third communication device according to an embodiment of this application;
FIG. 11 is a schematic structural diagram of a fourth communication device according to an embodiment of this application;
FIG. 12 is a schematic structural diagram of a fifth communication device according to an embodiment of this application;
FIG. 13 is a schematic structural diagram of a communication device according to an embodiment of this application;
FIG. 14 is a first schematic structural diagram of a network side device according to an embodiment of this application; and
FIG. 15 is a second schematic structural diagram of a network side device according to an embodiment of this application.

### DETAILED DESCRIPTION

Technical solutions in embodiments of the present application will be clearly and completely described below with reference to the drawings in the embodiments of the present application. Apparently, the described embodiments are part rather than all of the embodiments of the present application. All other embodiments obtained by those of ordinary skill in the art based on the embodiments of present application without creative efforts fall within the scope of protection of the present application.

In the specification and claims of this application, terms "comprise" and any variants thereof are intended to cover a non-exclusive inclusion. For example, a process, method, system, product, or device that includes a series of steps or units is not necessarily limited to those steps or units that are clearly listed, but may comprise other steps or units not clearly listed or inherent to such a process, method, product, or device.

Terms "first", "second", and the like in the specification and the claims of this application are used to distinguish similar objects instead of describing a specific order or sequence. It is to be understood that the terms used in this way are exchangeable in a proper case, so that the embodiments of this application can be implemented in a sequence other than sequences graphically shown or described here, and objects distinguished by "first" and "second" are usually of the same class without limiting a number of the objects, for example, a first object may be one or may be multiple.

In addition, "and/or" used in the specification and claims represent at least one of the connected objects. For example, A and/or B may represent the following three cases: Only A exists, only B exists, and both A and B exist. The character "/" in this specification generally indicates an "or" relationship between the associated objects.

In the embodiments of the present application, the word such as "exemplarily" or "for example" is used to mean serving as an example, an illustration, or a description. Any embodiment or design solution described as "exemplarily" or "for example" in the embodiments of the present application are not to be construed as being preferred or superior to other embodiments or design solutions. To be specific, the use of the word such as "exemplarily" or "for example" is intended to present the related concepts in a specific manner.

Technologies described herein are not limited to the fifth-generation mobile communication (5th-generation, 5G) system and a subsequent evolution-advanced communication system, is not limited to an LTE/LTE-advanced (LTE-Advanced, LTE-A) system, and may alternatively be applied to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems.

Terms "system" and "network" may usually be used interchangeably. A CDMA system may implement radio technologies such as CDMA2000 and universal terrestrial radio access (Universal Terrestrial Radio Access, UTRA). UTRA includes broadband CDMA (Wideband Code Division Multiple Access, WCDMA) and other CDMA variants. A TDMA system may implement radio technologies such as global system for mobile communication (Global System for Mobile Communication, GSM). An OFDMA system may implement radio technologies such as ultra mobile broadband (Ultra Mobile Broadband, UMB), evolution-UTRA (Evolution-UTRA, E-UTRA), IEEE 802.11( (Wi-Fi)), IEEE 802.16 ((WiMAX)), IEEE 802.20, and Flash-OFDMA. UTRA and E-UTRA are parts of a universal mobile telecommunications system (Universal Mobile Telecommunications system, UMTS). LTE and LTE-advanced (for example, LTE-A) are new versions of UMTS using E-UTRA. UTRA, E-UTRA, UMTS, LTE, LTE-A, and GSM are described in documents of an organization named "3rd generation partnership project" (3rd Generation Partnership Project, 3GPP). CDMA2000 and UMB are described in documents of an organization named "3rd generation partnership project 2" (3GPP2). The technology described herein may be applied to the systems and radio technologies mentioned above, and may alternatively be applied to other systems and radio technologies. The following description describes a new radio (New Radio, NR) system for a purpose of giving examples, and the term NR is used in most of the following descriptions. However, these technologies may alternatively be applied to applications other than an NR system application, for example, a 6th generation (6th Generation, 6G) communication system.

To facilitate a better understanding of the embodiments of the present application, the following technical points are first described below.

A round trip delay guarantee requirement exists in some services (such as an EXtended Reality (XR) media service and a cloud gaming service). An anchor gateway is a gateway that terminates an N6 interface. (N6 is an interface between a gateway of a network and a data network, and N6 may alternatively be referred to as another name)

Essentially, the round trip delay guarantee requirement is caused by an uplink first downlink delay imbalance of a service. For example, in a gaming service, an uplink packet is relatively small, and is usually an action packet of a user. Picture flutter can only be avoided and a delay budget can be reduced by transmitting the uplink packet to a server as soon as possible. A downlink data packet is relatively large, and is usually a background picture and a status packet of a game, and a delay budget requirement may be relatively high. However, uplink and downlink delay budgets of existing data tunnels are the same.

How to guarantee a round trip delay is a problem to be resolved in the present application. That is, an uplink or uplink delay overhead may exceed a delay budget of a QoS flow (it is assumed that the delay budget corresponding to the QoS flow or 5QI is 1/2 of a round trip delay budget). A sum of the uplink delay overhead and downlink delay overhead cannot exceed the round trip delay budget (that is, twice the delay budget of the QoS flow). When a RAN performs round trip delay control, if the RAN obtains a round trip delay (first round trip delay) budget between a terminal and an anchor gateway or requires that round trip delay overhead does not exceed twice the delay budget of a data tunnel, a method is that the RAN determines a delay (a third round trip delay) budget between a UE and the RAN by monitoring round trip delay (second round trip delay) overhead of N3, so that a sum of the first uplink delay overhead and the second downlink delay overhead cannot exceed a first round trip delay budget.

Currently, QoS monitoring may implement statistics of an RTT delay of an N3 interface, and the RAN needs to cooperate with a UPF. A QoS monitoring method is to converge to the UPF to generate the RTT delay.

However, a method to be solved in the present application is that the RAN monitors N3 interface delay overhead for round trip delay scheduling. Therefore, a direction is contrary to the current QoS monitoring method, and a new delay monitoring configuration needs to be defined, which is one of the problems to be solved by the present application.

When a PCF performs round trip delay control, a direction of QoS monitoring may not be changed, but a delay between the UE and the anchor gateway is subscribed instead of a delay between a RAN network element and an anchor gateway.

Problem 1: How to perform delay scheduling/control to guarantee a round trip delay.

Problem 2: The RAN monitors the N3 interface delay overhead for round trip delay scheduling, and a new delay monitoring configuration needs to be defined.

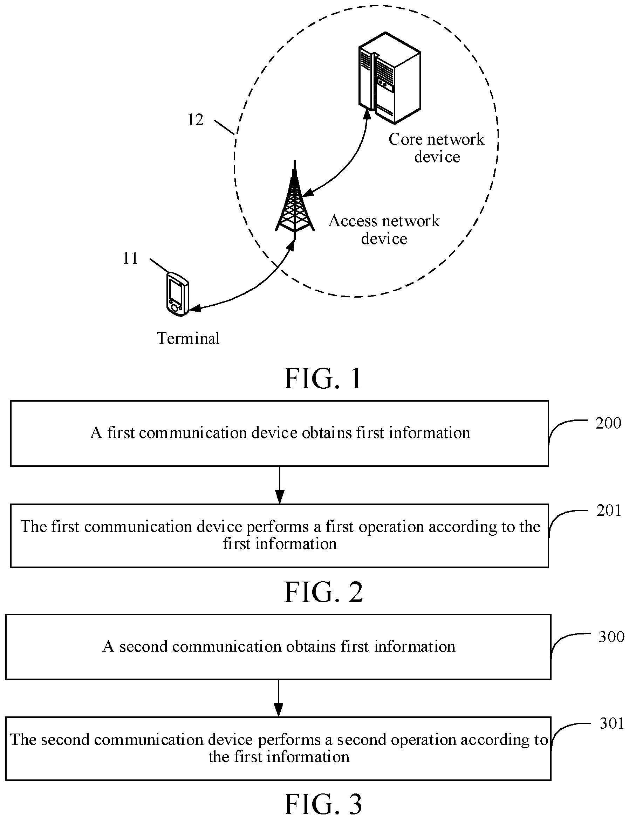

Refer to FIG. 1, which is a schematic architectural diagram of a wireless communication system according to an embodiment of the present application.

FIG. 1 is a block diagram of a wireless communication system that can be applied to the embodiments of this application. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (PUE), a smart home device (a home device with a wireless communication function, such as a refrigerator, a television, a washing machine, or furniture), a game console, a personal computer (personal computer, PC), an automatic teller machine, or a self-service machine. The wearable device includes: a smart watch, a smart bracelet, a smart headphone, smart glasses, smart jewelry (a smart bracelet, a smart bracelet, a smart ring, a smart necklace, a smart anklet, a smart ankle chain, and the like), a smart wristband, smart clothing, and the like. It is to be noted that, there is no limitation to a specific type of the terminal 11 in the embodiments of this application. The network side device 12 may include an access network device or a core network device. The access network device 12 may alternatively be referred to as a Radio Access Network device, a Radio Access Network (RAN), a Radio Access Network function, or a Radio Access Network unit. The access network device 12 may include a base station, a WLAN access point, a WiFi node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or another appropriate term in the art. As long as the same technical effect is achieved, the base station is not limited to a specific technology vocabulary. It is to be noted that, in the embodiments of this application, an introduction is made by only taking the base station in the NR system as an example, and there is no limitation to a specific type of the base station. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), and a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It is to be noted that, in the embodiments of this application, an introduction is made by only taking the core network device in the NR system as an example, and there is no limitation to a specific type of the base station.

Optionally, obtaining may be understood as obtaining from a configuration, receiving, receiving after a request, obtaining through self-learning, deriving and obtaining based on unreceived information, or obtaining after processing based on received information, which may be specifically determined according to actual needs. This is not limited in the embodiments of the present application. For example, when certain capability indication information transmitted by a device is not received, it may be derived that the device does not support the capability.

Optionally, transmitting may include broadcasting, broadcasting in a system message, and returning after responding to a request.

In an optional embodiment of the present application, a communication device may include at least one of the following: a communication network element and a terminal.

In an embodiment of the present application, the communication network element may include at least one of the following: a core network network element and a radio access network network element.

In the embodiments of the present application, the core network element (the CN network element) may include, but is not limited to, at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), and an application function (Application Function).

In the embodiments of the present application, the RAN network element may include, but is not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved node B (evolved Node B, eNB), a 5G node B (gNB), a radio network controller (Radio Network Controller, RNC), a node B (NodeB), a non-3GPP inter working function (Non-3GPP Inter Working Function, N3IWF), an access controller (Access Controller, AC) node, an access point (Access Point, AP) device or a wireless local area networks (Wireless Local Area Networks, WLAN) node, and an N3IWF.

A base station may be a base transceiver station (BTS, Base Transceiver Station) in GSM or CDMA, or may be a NodeB (NodeB) in WCDMA, or may be an evolutional node B (eNB or e-NodeB, evolutional Node B) in LTE and a 5G node B (gNB). This is not limited in the present application.

In an optional embodiment of the present application, the UE may include one of the following: a terminal device, a terminal device and card, and a card.

In an optional embodiment of the present application, the card may include one of the following: a SIM card, a USIM card, and an eSIM card.

In an optional embodiment of the present application, the terminal may include a relay supporting a terminal function and/or a terminal supporting a relay function. The terminal may alternatively be referred to as a terminal device or a user equipment (User Equipment, UE). The terminal may be a terminal side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device) or a vehicle device. It is to be noted that, a specific type of the terminal is not limited in the embodiments of the present application.

In an optional embodiment of the present application, a delay is delay overhead. A delay budget may be understood as a maximum value of the delay. That is, a real delay cannot exceed a value of the delay budget.

In an optional embodiment of the present application, a delay requirement is equivalent to a delay budget.

In an optional embodiment of the present application, a QoS requirement is equivalent to a QoS parameter requirement.

In an implementation, the delay budget is reflected by a delay budget parameter, or is represented by a QoS identifier (for example, a 5QI5G QoS Identifier). Because a standardized QoS identifier value is in one-to-one correspondence with the delay budget, the delay budget may be reflected.

In an implementation, a single direction delay budget represents an uplink delay budget (such as a first uplink delay budget, a second uplink delay budget, and a third uplink delay budget) and/or a downlink delay budget (such as a first downlink delay budget, a second downlink delay budget, and a third downlink delay budget), and the uplink delay budget is the same as the downlink delay budget.

In an implementation, a delay budget of a data tunnel in QoS configuration information of a first data tunnel represents an uplink delay budget (such as a first uplink delay budget, a second uplink delay budget, and a third uplink delay budget) and/or a downlink delay budget (such as a first downlink delay budget, a second downlink delay budget, and a third downlink delay budget), and the uplink delay budget is the same as the downlink delay budget.

In an implementation, a delay budget of a data tunnel in QoS configuration information of a second data tunnel represents a delay budget of the second data tunnel; and the delay budget of the second data tunnel represents an uplink delay budget (such as a first uplink delay budget, a second uplink delay budget, and a third uplink delay budget).

In an implementation, a delay budget of a data tunnel in QoS configuration information of a third data tunnel represents a delay budget of the third data tunnel; and the delay budget of the third data tunnel represents a downlink delay budget (such as a first downlink delay budget, a second downlink delay budget, and a third downlink delay budget).

In an optional embodiment of the present application, the delay monitoring includes delay measurement, which may alternatively be referred to as delay monitoring. The delay monitoring may represent a meaning of measuring and/or monitoring a delay. In an optional embodiment of the present application, the delay monitoring result is a measured delay value. In an optional embodiment of the present application, the delay monitoring operation represents measuring the delay.
(1) In an optional embodiment of the present application, a first round trip delay is a round trip delay between a terminal (for example, a UE) and an anchor gateway. The anchor gateway is a gateway that terminates an N6 interface. N6 is an interface between a gateway of a network and a data network, and N6 may alternatively be referred to as another name.

Optionally, the round trip delay between the terminal and the anchor gateway includes at least one of the following: an uplink delay from the terminal to the anchor gateway, and a downlink delay from the anchor gateway to the terminal.

Further, the round trip delay between the terminal and the anchor gateway may further include at least one of the following: a dwell delay of data at the terminal, a dwell delay of the data at a RAN network element, and a dwell delay of the data at the anchor gateway.

Further, the uplink delay from the terminal to the anchor gateway may further include at least one of the following: a dwell delay of uplink data at the terminal, a dwell delay of the uplink data at the RAN network element, and a dwell delay of the uplink data at the anchor gateway.

Further, the downlink delay from the anchor gateway to the terminal may further include at least one of the following: a dwell delay of downlink data at the terminal, a dwell delay of the downlink data at the RAN network element, and a dwell delay of the downlink data at the anchor gateway.

In an optional embodiment of the present application, the uplink delay or a first uplink delay from the terminal to the anchor gateway is a time required for data to be transmitted from the terminal to the anchor gateway.

In an optional embodiment of the present application, the downlink delay or a first downlink delay from the anchor gateway to the terminal is a time required for data to be transmitted from the anchor gateway to the terminal.

(2) In an optional embodiment of the present application, the second round trip delay is a round trip delay between the RAN network element and the anchor gateway.

Optionally, the round trip delay between the RAN network element and the anchor gateway includes at least one of the following: an uplink delay from the RAN network element to the anchor gateway, and a downlink delay from the anchor gateway to the RAN network element.

Further, the round trip delay between the RAN network element and the anchor gateway may further include at least one of the following: a dwell delay of data at the RAN network element, and a dwell delay of the data at the anchor gateway.

Further, an uplink delay from the RAN network element to the anchor gateway may further include at least one of the following: a dwell delay of uplink data at the RAN network element, and a dwell delay of the uplink data at the anchor gateway. For example, the uplink delay from the RAN network element to the anchor gateway may consist of or be a sum of the following values: the uplink delay between the RAN network element and the anchor gateway, the dwell delay of the uplink data at the RAN network element, and the dwell delay of the uplink data at the anchor gateway.

Further, the downlink delay from the anchor gateway to the RAN network element may further include at least one of the following: a dwell delay of downlink data at the RAN network element, and a dwell delay of the downlink data at the anchor gateway. For example, the downlink delay from the RAN network element to the anchor gateway may consist of or be a sum of the following values: the downlink delay from the anchor gateway to the RAN network element, the dwell delay of the downlink data at the RAN network element, and the dwell delay of the downlink data at the anchor gateway.

In an optional embodiment of the present application, the uplink delay or a second uplink delay from the RAN network element to the anchor gateway is a time required for data to be transmitted from the RAN network element to the anchor gateway.

In an optional embodiment of the present application, the downlink delay or a second downlink delay from the anchor gateway to the RAN network element is a time required for the data to be transmitted from the anchor gateway to the terminal.

(3) In an optional embodiment of the present application, a third round trip delay is a round trip delay between the terminal and the RAN network element.

Optionally, the round trip delay between the terminal and the RAN network element includes at least one of the following: an uplink delay from the terminal to the RAN network element to the anchor gateway, and a downlink delay from the RAN network element to the terminal.

Further, the round trip delay between the terminal and the RAN network element further includes at least one of the following: a dwell delay of data at the RAN, and a dwell delay of the data at the terminal.

Further, the uplink delay from the terminal to the RAN network element may further include at least one of the following: a dwell delay of the uplink data at the RAN, and a dwell delay of the uplink data at the terminal. For example, the uplink delay from the terminal to be RAN network element may consist of or be a sum of the following values: the uplink delay between the terminal and the RAN network element, the dwell delay of the uplink data at the RAN network element, and the dwell delay of the uplink data at the terminal.

Further, the downlink delay from the RAN network element to the terminal may further include at least one of the following: a dwell delay of the downlink data at the RAN, and a dwell delay of the downlink data at the terminal. For example, the downlink delay from the RAN network element to the terminal may consist of or be a sum of the following values: the downlink delay from the RAN network element to the terminal, the dwell delay of the downlink data at the RAN network element, and the dwell delay of the downlink data at the terminal.
(1) In an optional embodiment of the present application, a first round trip delay budget is a round trip delay budget between the terminal and the anchor gateway. Optionally, the round trip delay budget between the terminal and the anchor gateway includes at least one of the following: the uplink delay budget from the terminal to the anchor gateway, and the downlink delay budget from the anchor gateway to the terminal.

Further, the round trip delay budget between the terminal and the anchor gateway may further include at least one of the following: a dwell delay budget of data at the terminal, a dwell delay budget of data at the RAN network element, and a dwell delay budget of data at the anchor gateway.

Further, the uplink delay budget from the terminal to the anchor gateway may further include at least one of the following: a dwell delay budget of the uplink data at the terminal, a dwell delay budget of the uplink data at the RAN network element, and a dwell delay budget of the uplink data at the anchor gateway.

Further, the downlink delay budget from the anchor gateway to the terminal may further include at least one of the following: a dwell delay budget of the downlink data at the terminal, a dwell delay budget of the downlink data at the RAN network element, and a dwell delay budget of the downlink data at the anchor gateway.

In an optional embodiment of the present application, the uplink delay budget or the first uplink delay budget from the terminal to the anchor gateway is a time required for data to be transmitted from the terminal to the anchor gateway.

In an optional embodiment of the present application, the downlink delay budget or a first downlink delay budget from the anchor gateway to the terminal is a time required for data to be transmitted from the anchor gateway to the terminal.

(2) In an optional embodiment of the present application, a second round trip delay budget is a round trip delay budget between the RAN network element and the anchor gateway.

Optionally, the round trip delay budget between the RAN network element and the anchor gateway includes at least one of the following: an uplink delay budget from the RAN network element to the anchor gateway, and a downlink delay budget from the anchor gateway to the RAN network element.

Further, the round trip delay budget between the RAN network element and the anchor gateway may further include at least one of the following: a dwell delay budget of the data at the RAN network element, and a dwell delay budget of the data at the anchor gateway.

Further, the uplink delay budget from the RAN network element to the anchor gateway may further include at least one of the following: a dwell delay budget of the uplink data at the RAN network element, and a dwell delay budget of the uplink data at the anchor gateway. For example, the uplink delay budget from the RAN network element to the anchor gateway may consist of or be a sum of the following values: the uplink delay budget between the RAN network element and the anchor gateway, the dwell delay budget of uplink data at the RAN network element, and the dwell delay budget of uplink data at the anchor gateway.

Further, the downlink delay budget from the anchor gateway to the RAN network element may further include at least one of the following: the dwell delay budget of the downlink data at the RAN network element, and the dwell delay budget of the downlink data at the anchor gateway. For example, the downlink delay budget from the RAN network element to the anchor gateway may consist of or be a sum of the following values: the downlink delay budget from the anchor gateway to the RAN network element, the dwell delay budget of the downlink data at the RAN network element, and the dwell delay budget of the downlink data at the anchor gateway.

In an optional embodiment of the present application, the uplink delay budget or a second uplink delay budget from the RAN network element to the anchor gateway is a time required for data to be transmitted from the RAN network element to the anchor gateway.

In an optional embodiment of the present application, the downlink delay budget or a second downlink delay budget from the anchor gateway to the RAN network element is a time required for data to be transmitted from the anchor gateway to the terminal.

(3) In an optional embodiment of the present application, a third round trip delay budget is a round trip delay budget between the terminal and the RAN network element.

Optionally, the round trip delay budget between the terminal and the RAN network element includes at least one of the following: an uplink delay budget from the terminal to the RAN network element to the anchor gateway, and a downlink delay budget from the RAN network element to the terminal.

Further, the round trip delay budget between the terminal and the RAN network element further includes at least one of the following: a dwell delay budget of data at the RAN, and a dwell delay budget of data at the terminal.

Further, the uplink delay budget from the terminal to the RAN network element may further include at least one of the following: a dwell delay budget of uplink data at the RAN, and a dwell delay budget of the uplink data at the terminal. For example, the uplink delay budget from the terminal to the RAN network element may consist of or be a sum of the following values: the uplink delay budget between the terminal and the RAN network element, the dwell delay budget of the uplink data at the RAN network element, and the dwell delay budget of the uplink data at the terminal.

Further, the downlink delay budget from the RAN network element to the terminal may further include at least one of the following: a dwell delay budget of downlink data at the RAN, and a dwell delay budget of the downlink data at the terminal. For example, the downlink and downlink delay budget from the RAN network element to the terminal may consist of or be a sum of the following values: the downlink delay budget from the RAN network element to the terminal, the dwell delay budget of the downlink data at the RAN network element, and the dwell delay budget of the downlink data at the terminal.

In an optional embodiment of the present application, the uplink delay or a third uplink delay from the terminal to the RAN network element is a time required for data to be transmitted from the terminal to the RAN network element.

In an optional embodiment of the present application, the downlink delay or a third downlink delay from the RAN network element to the terminal is a time required for data to be transmitted from the RAN network element to the terminal.

In an optional embodiment of the present application, an uplink measurement packet may be referred to as an uplink packet for short. The uplink measurement packet is a data packet configured for delay measurement in an uplink direction.

In an optional embodiment of the present application, the downlink measurement packet may be referred to as an uplink packet for short. The downlink measurement packet is a data packet configured for delay measurement in a downlink direction.

In some optional embodiments, the uplink packet or the downlink packet is a real service data packet or a packet generated for time monitoring.

In an optional embodiment of the present application, a tunnel or a data tunnel may include at least one of the following: a PDU session, a PDN connection, a quality of service (Quality of Service, QoS) flow, an evolved packet system (Evolved Packet System, EPS) bearer, PDP context, a DRB, an SRB, an Internet protocol security (Internet Protocol Security, IPsec) association, and the like.

In an embodiment of the present application, an NG interface may alternatively be referred to as an S 1 interface or an N2 interface, and a name is not limited.

In an embodiment of the present application, the wireless communication network may be at least one of the following: a public network, a non-public network; alternatively, the first network may be a non-public network.

In an embodiment of the present application, the non-public network is short for a non-public network. The non-public network may be referred to as one of the following: a non-public communication network. The non-public network may include at least one of the following deployment manners: a physical non-public network, a virtual non-public network, and a non-public network implemented on a public network. In an implementation, the non-public network is a closed access group (Closed Access Group, CAG). A CAG may include a group of terminals.

In an embodiment of the present application, the non-public network may include or be referred to as a private network. The private network may be referred to as one of the following: a private communication network, a private network, a local area network (LAN), a private virtual network (PVN), an isolated communication network, a dedicated communication network, or other names. It is to be noted that, in the embodiments of the present application, a naming manner is not specifically limited.

In an embodiment of the present application, the public network is short for a public network. The public network may be referred to as one of the following: a public communication network or another name. It is to be noted that, in the embodiments of the present application, a naming manner is not specifically limited.

In an embodiment of the present application, a data packet size may be referred to as a data packet length.

In one embodiment of the present application, the data packet may be referred to as a data frame.

In an optional embodiment of the present application, a communication device may include at least one of the following: a communication network element and a terminal.

In an embodiment of the present application, the communication network element may include at least one of the following: a core network network element and a wireless access network network element.

A QoS control method according to the embodiments of the present application is described below.

Please refer to FIG. 2, the embodiments of the present application provide a QoS control method, applied to a first communication device. The first communication device includes, but is not limited to, one of the following: a RAN network element and a CN network element (for example, but not limited to, a PCF), the method including the following steps.

Step 200: The first communication device obtains first information.

The first information includes at least one of the following:
delay monitoring configuration information;
first QoS configuration information; and
first indication information.

The first indication information is used to indicate at least one of the following: performing delay guarantee according to a delay monitoring result and/or the first QoS configuration information; and performing delay guarantee according to the delay monitoring result and/or a third round trip delay budget.

The first QoS configuration information includes at least one of the following:
a first round trip delay budget, a first uplink delay budget, and a first downlink delay budget;
a third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate: a round trip delay being not able to exceed a round trip delay budget.

Step 201: The first communication device performs a first operation according to the first information.

The performing a first operation includes at least one of the following:
determining at least one of the following: a third round trip delay budget, a third uplink delay budget, and a third downlink delay budget;
determining a first round trip delay budget as one of the following: a value of twice a delay budget of a data tunnel, the first round trip delay budget in the first QoS configuration information, and a sum of a first uplink delay budget and a first downlink delay budget;
performing a delay monitoring operation; and
performing delay guarantee according to the delay monitoring result and/or the first QoS configuration information.

In an implementation, the first QoS configuration information does not include at least one of the following: a third round trip delay budget, a third uplink delay budget, and a third downlink delay budget. The first communication device may determine, according to the first QoS configuration information, at least one of the following: a third round trip delay budget, a third uplink delay budget, and a third downlink delay budget.

In an implementation, the "delay guarantee" refers to adjusting a delay budget so that the delay does not exceed the delay budget. For example, the round trip delay needs to be guaranteed. When the round trip delay budget is determined, and when an uplink delay monitoring result is relatively large and exceeds the uplink delay budget, the uplink delay budget may be appropriately increased and the downlink delay budget may be decreased, so that the overall round trip delay does not exceed the round trip delay budget. Vice versa, when a downlink delay monitoring result is relatively large and exceeds the downlink delay budget, the downlink delay budget may be appropriately increased and the uplink delay budget decreased, so that the overall round trip delay does not exceed the round trip delay budget.

The first round trip delay budget is the round trip delay budget between a terminal and an anchor gateway;
the first uplink delay budget is the uplink delay budget from the terminal to the anchor gateway;
the first downlink delay budget is the downlink delay budget from the anchor gateway to the terminal;
the third uplink delay budget is the uplink delay budget from the terminal to a RAN network element;
the third downlink delay budget is the downlink delay budget from the RAN network element to the terminal; and
the third round trip delay budget is the round trip delay budget between the terminal and the RAN network element.

Optionally, the delay monitoring configuration information includes:
a delay required to be measured, including at least one of the following: the first uplink delay, the first downlink delay, the first round trip delay, the second uplink delay, the second downlink delay, and the second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

Optionally, the delay required to be measured is one of the following: a delay that the RAN network element is responsible for calculating, and a delay that is calculated by the anchor gateway and transmitted to the RAN network element.

In an implementation, an Nth uplink delay is responsible for the RAN network element to calculate, an Nth downlink delay is responsible for the RAN network element to calculate, an Nth round trip delay is responsible for the RAN network element to calculate, and N may be one of the following values: 1, 2.

In an implementation, the Nth uplink delay is calculated and transmitted to the RAN network element by the anchor gateway, the Nth downlink delay is calculated and transmitted to the RAN network element by the anchor gateway, and the Nth round trip delay is calculated and transmitted to the RAN network element by the anchor gateway and may be one of the following values: 1, 2.

In some optional embodiments, the first QoS configuration information is one of the following: QoS configuration information of a first data tunnel, and QoS configuration information of a second data tunnel and/or a third data tunnel;
and/or
the delay monitoring configuration information is one of the following: delay monitoring configuration information of the first data tunnel, and delay monitoring configuration information of the second data tunnel and/or the third data tunnel.

The first data tunnel is configured for uplink and/or downlink, the second data tunnel is configured for uplink, and the third data tunnel is configured for downlink.

In an implementation, uplink delay related information (for example, the first uplink delay and the second uplink delay) in the first QoS configuration information and/or a delay budget of a data tunnel is the QoS configuration information of the second data tunnel.

In an implementation, downlink delay related information (for example, the first downlink delay and the second downlink delay) and/or the delay budget of the data tunnel in the first QoS configuration information is the QoS configuration information of the third data tunnel.

In an implementation, at least one of the round trip delay related information (for example, the first round trip delay and the second round trip delay), the second indication information, the third indication information, and the fourth indication information in the first QoS configuration information is QoS configuration information common to the second data tunnel and the third data tunnel.

In some optional embodiments, the delay monitoring operation includes at least one of the following:
an uplink delay monitoring operation, including at least one of the following: a monitoring operation for a first uplink delay; a monitoring operation for a second uplink delay; a monitoring operation for a third uplink delay;
a downlink delay monitoring operation, including at least one of the following: a monitoring operation for a first downlink delay; a monitoring operation for a second downlink delay; and a monitoring operation for a third downlink delay; and
a round trip delay monitoring operation, including at least one of the following: a monitoring operation for a first round trip delay, a monitoring operation for a second round trip delay, and a monitoring operation for a third round trip delay.

The first round trip delay is a round trip delay between a terminal and an anchor gateway,
the second round trip delay is a round trip delay between a RAN network element and the anchor gateway,
the third round trip delay is a round trip delay between the terminal and the RAN network element,
the first uplink delay is an uplink delay from the terminal to the anchor gateway,
the first downlink delay is a downlink delay from the anchor gateway to the terminal,
the second uplink delay is an uplink delay from the RAN network element to the anchor gateway,
the second downlink delay is a downlink delay from the anchor gateway to the RAN,
the third uplink delay is an uplink delay from the terminal to the RAN network element, and
the third downlink delay is a downlink delay from the RAN network element to the terminal.

In some optional embodiments, the performing a delay monitoring operation, and/or, performing delay guarantee according to the delay monitoring result and/or the first QoS configuration information includes:
performing the delay monitoring operation in a case that a first condition is satisfied, and/or performing the delay guarantee according to the delay monitoring result and/or the first QoS configuration information.

The first condition includes at least one of the following:
the first uplink delay exceeds one of the following: a delay budget of a data tunnel, 1/2 a first round trip delay budget, and a first uplink delay budget;
the first downlink delay exceeds one of the following: a delay budget of a data tunnel, 1/2 a first round trip delay budget, and a first downlink delay budget;
the third uplink delay exceeds one of the following: a delay budget between a terminal and the RAN network element of the data tunnel, 1/2 the third round trip delay budget, and the third uplink delay budget; and
the third downlink delay exceeds one of the following: a delay budget between a terminal and the RAN network element of the data tunnel, 1/2 the first round trip delay budget, and the third downlink delay budget.

In some optional embodiments, the first condition further includes at least one of the following:
a sum of the first uplink delay and a first downlink delay does not exceed a first round trip delay budget; and
a sum of the third uplink delay and the third downlink delay does not exceed a third round trip delay budget.

In some optional embodiments, the performing delay guarantee according to the delay monitoring result and/or the first QoS configuration information includes at least one of the following:
determining or adjusting, according to the delay monitoring result and/or the round trip delay budget, at least one of the following: an uplink delay budget, a downlink delay budget, and a third round trip delay budget;
guaranteeing that the first round trip delay does not exceed the first round trip delay budget;
guaranteeing that the first uplink delay does not exceed the first uplink delay budget;
guaranteeing that the first downlink delay does not exceed the first downlink delay budget;
guaranteeing that the third round trip delay does not exceed the third round trip delay budget;
guaranteeing that the third uplink delay does not exceed the third uplink delay budget;
guaranteeing that the third downlink delay does not exceed the third downlink delay budget;
guaranteeing that the second round trip delay does not exceed the second round trip delay budget;
guaranteeing that the second uplink delay does not exceed the second uplink delay budget; and
guaranteeing that the second downlink delay does not exceed the second downlink delay budget.

Further, the delay monitoring result includes at least one of the following: an uplink delay monitoring result, a downlink delay monitoring result, and a round trip delay monitoring result.

The round trip delay budget includes at least one of the following: a first round trip delay budget, a second round trip delay budget, and a third round trip delay budget.

In an implementation, the uplink delay monitoring result includes at least one of the following: a first uplink delay monitoring result; a second uplink delay monitoring result; and a third uplink delay monitoring result.

In an implementation, the downlink delay monitoring result includes at least one of the following: a first downlink delay monitoring result; a second downlink delay monitoring result; and a third downlink delay monitoring result.

In an implementation, the round trip delay monitoring result includes at least one of the following: a first round trip delay monitoring result, a second round trip delay monitoring result, and a third round trip delay monitoring result.

In an implementation, the uplink delay budget includes at least one of the following: a first uplink delay budget; a second uplink delay budget; and a third uplink delay budget.

In an implementation, the downlink delay budget includes at least one of the following: a first downlink delay budget; a second downlink delay budget; and a third downlink delay budget.

In some optional embodiments, the determining or adjusting an uplink delay budget, a downlink delay budget, and/or a third round trip delay budget according to the delay monitoring result and/or the round trip delay budget includes at least one of the following:
determining or adjusting the first uplink delay budget and/or the first downlink delay budget according to at least one of the first round trip delay budget, the first round trip delay monitoring result, the first uplink delay monitoring result, and the first downlink delay monitoring result;
determining or adjusting, according to at least one of the first round trip delay budget, the first round trip delay monitoring result, the second uplink delay monitoring result, the second downlink delay monitoring result, the third uplink delay monitoring result, and the third downlink delay monitoring result, at least one of the following: a third uplink delay budget, and a third downlink delay budget; and
determining or adjusting the third round trip delay budget according to at least one of the first round trip delay budget, the first round trip delay monitoring result, the second round trip delay monitoring result, the second uplink delay monitoring result, and the second downlink delay monitoring result.

Optionally, the monitoring operation for the first uplink delay includes at least one of the following:
recording a T11 time;
recording a T1 time;
determining a third uplink delay;
adding packet header information to the first uplink packet, the packet header information including at least one of the following: the T1 time, the T11 time, and the third uplink delay;
transmitting the first uplink packet;
receiving a first downlink packet, packet header information of the first downlink packet including at least one of the following: a T2 time, a first uplink delay, a second uplink delay, and the packet header information of the first uplink packet; and
determining the first uplink delay, including one of the following: obtaining the first uplink delay through T2-T1+the third uplink delay, obtaining the first uplink delay T2-T11, the second uplink delay+the third uplink delay, and directly obtaining the first uplink delay from the packet header information of the first downlink packet.

The T11 time is one of the following: a time that the RAN network element schedules a second uplink packet, and a time that the terminal transmits the second uplink packet;
the T1 time is a transmitting time of the first uplink packet; and
the T2 time is a receiving time of the first uplink packet.

Optionally, the monitoring operation for the first downlink delay includes at least one of the following:
receiving a first downlink packet, packet header information of the first downlink packet including: a T3 time;
recording a T4 time;
determining a third downlink delay; and
determining a first downlink delay, including: T4-T3+the third downlink delay.

The T3 time is a transmitting time of the first downlink packet; and
the T4 time is a receiving time of the first downlink packet.

In some optional embodiments, the monitoring operation for the first round trip delay includes at least one of the following:
recording a T11 time;
recording a T 1 time;
determining a third uplink delay;
adding packet header information to the first uplink packet, the packet header information including at least one of the following: the T1 time, the T11 time, and the third uplink delay;
transmitting the first uplink packet;
receiving a first downlink packet, packet header information of the downlink packet including at least one of the following: a T2 time, a T3 time, a first uplink delay, a second uplink delay, and packet header information of the first uplink packet; and
determining the first round trip delay, including one of the following: obtaining the first round trip delay through ((T2-T1)+(T4-T3)+the third downlink delay+the third uplink delay), obtaining the first round trip delay through ((T2-T11)+(T4-T3)+the third downlink delay), obtaining the first round trip delay through (the second uplink delay+(T4-T3)+the third downlink delay+the third uplink delay), and obtaining the first round trip delay through (the first uplink delay+(T4-T3)+the third downlink delay).

The T11 time is one of the following: a time that the RAN network element schedules a second uplink packet, and a time that the terminal transmits the second uplink packet;
the T1 time is a transmitting time of the first uplink packet;
the T2 time is a receiving time of the first uplink packet;
the T3 time is a transmitting time of the first downlink packet; and
the T4 time is a receiving time of the first downlink packet.

Optionally, the monitoring operation for the second uplink delay includes at least one of the following:
recording a T1 time;
adding packet header information to the first uplink packet, the packet header information including at least one of the following: the T1 time;
transmitting the first uplink packet;
receiving a first downlink packet, packet header information of the first downlink packet including at least one of the following: a T2 time, a second uplink delay; and
determining the second uplink delay, including one of the following: obtaining the second uplink delay through T2-T1, and reading the second uplink delay from a packet header of the first downlink packet.

The T1 time is a transmitting time of the first uplink packet; and
the T2 time is a receiving time of the first uplink packet.

In some optional embodiments, the monitoring operation for the second downlink delay includes at least one of the following:
receiving a first downlink packet, packet header information of the first downlink packet including a T3 time, and the T3 time being a transmitting time of the first downlink packet;
recording a T4 time, the T4 time being a receiving time of the first downlink packet; and
determining the second downlink delay, including: obtaining the second downlink delay according to T4-T3.

In some optional embodiments, the monitoring operation for the second round trip delay includes at least one of the following:
recording a T1 time;
adding packet header information to the first uplink packet, the packet header information including at least one of the following: information configured to measure a delay of the first uplink packet, and a T 1 time;
transmitting the first uplink packet;
receiving a first downlink packet, packet header information of the first downlink packet including at least one of the following: a T2 time, a T3 time, the T1 time, the second uplink delay, and the packet header information of the first uplink packet;
recording a T4 time, the T4 time being a receiving time of the first downlink packet; and
determining the second round trip delay, including one of the following: obtaining the second round trip delay according to (T4-T3)+(T2-T1), and obtaining the second round trip delay according to (T4-T3)+the second uplink delay.

The T1 time is a transmitting time of the first uplink packet,
the T2 time is a receiving time of the first uplink packet, and
the T3 time is a transmitting time of the first downlink packet.

In some optional embodiments, the determining or adjusting at least one of the first uplink delay budget and the first downlink delay budget according to the delay monitoring result and/or the round trip delay budget includes at least one of the following:
determining the first uplink delay according to a second uplink delay monitoring result and a third uplink delay monitoring result, and determining or adjusting at least one of the first uplink delay budget and the first downlink delay budget according to the first uplink delay and the first round trip delay budget; and
determining the first downlink delay according to a second downlink delay monitoring result and a third downlink delay monitoring result, and determining or adjusting at least one of the first uplink delay budget and the first downlink delay budget according to the first downlink delay and the first round trip delay budget.

In some optional embodiments, the determining or adjusting the third round trip delay budget according to the delay monitoring result and/or the round trip delay budget includes at least one of the following:
determining the third round trip delay budget according to the second round trip delay monitoring result and the first round trip delay budget; and
determining the third uplink delay budget and/or the third downlink delay budget according to the second round trip delay monitoring result and the first round trip delay budget.

In some optional embodiments, the guaranteeing that the first round trip delay does not exceed the first round trip delay budget includes at least one of the following:
a sum of the third uplink delay and the third downlink delay does not exceed a first value, where
the first value is a difference between the first round trip delay budget and the second round trip delay monitoring result.

In some optional embodiments, the guaranteeing that the first uplink delay does not exceed the first uplink delay budget includes at least one of the following:
the third uplink delay or the third uplink delay budget does not exceed a second value, where
the second value is a difference between the first uplink delay budget and a second uplink delay monitoring result, or a value obtained by subtracting a third uplink delay monitoring result from a difference between the first round trip delay budget and a second round trip delay monitoring result, or a value obtained by subtracting the third uplink delay budget from the difference between the first round trip delay budget and the second round trip delay monitoring result.

In some optional embodiments, the guaranteeing that the first downlink delay does not exceed the first downlink delay budget includes at least one of the following:
the third downlink delay or the third uplink delay budget does not exceed a third value, where
the third value is a difference between the first downlink delay budget and the second downlink delay monitoring result, or a value obtained by subtracting a third uplink delay monitoring result from a difference between the first round trip delay budget and the second round trip delay monitoring result, or a value obtained by subtracting the third uplink delay budget from a difference between the first round trip delay budget and the first round trip delay monitoring result.

In an implementation, a first communication device obtains first information from a first source end. The first source end includes at least one of the following: a fourth communication device, a third CN network element (for example, but not limited to, an SMF network element).

According to the embodiments of the present application, the first communication device obtains at least one of the delay monitoring configuration information, the first QoS configuration information, and the first indication information, and determines at least one of the following: a third round trip delay budget, a third uplink delay budget, and a third downlink delay budget; a first round trip delay budget is determined, a delay monitoring operation is performed, and/or delay guarantee is performed according to a delay monitoring result and/or the first QoS configuration information, so that the first communication device may perform delay scheduling/control to guarantee a round trip delay.

Please refer to FIG. 3, the embodiments of the present application provide a QoS control method, applied to a second communication device. The second communication device includes, but is not limited to, a CN network element (for example, but not limited to, an anchor gateway (such as a UPF). When the second communication device is a CN network element, the CN network element may be referred to as a first CN network element. The anchor gateway is a gateway that terminates an N6 interface (N6 is an interface between the gateway of a network and a data network, and N6 may alternatively be referred to as other names). The method includes the following steps:
Step 300: The second communication obtains first information.

The first information includes at least one of the following:
delay monitoring configuration information;
first QoS configuration information; and
first indication information, the first indication information being used to indicate one of the following: performing delay guarantee according to a delay monitoring result and/or the first QoS configuration information; and performing delay guarantee according to the delay monitoring result and/or a third round trip delay budget.

The first QoS configuration information includes at least one of the following:
a first round trip delay budget, a first uplink delay budget, and a first downlink delay budget;
a third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate: a round trip delay being not able to exceed a round trip delay budget.
Step 301: The second communication device performs a second operation according to the first information.

The second operation includes at least one of the following:
a delay monitoring operation.

In some optional embodiments, the delay monitoring configuration information includes:
a delay required to be measured, including at least one of the following: a first uplink delay, a first downlink delay, a first round trip delay, a second uplink delay, a second downlink delay, and a second round trip delay, where
the first round trip delay is a round trip delay between a terminal and an anchor gateway,
the second round trip delay is a round trip delay between a RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

In some optional embodiments, the delay required to be measured is one of the following: a delay that the RAN network element is responsible for calculating, and a delay that is measured by the anchor gateway and transmitted to the RAN network element.

In some optional embodiments, the first QoS configuration information is one of the following: QoS configuration information of a first data tunnel, and QoS configuration information of a second data tunnel and/or a third data tunnel;
and/or
the delay monitoring configuration information is one of the following: delay monitoring configuration information of the first data tunnel, and delay monitoring configuration information of the second data tunnel and/or the third data tunnel.

The first data tunnel is configured for uplink and/or downlink, the second data tunnel is configured for uplink, and the third data tunnel is configured for downlink.

In some optional embodiments, the delay monitoring operation includes at least one of the following:
an uplink delay monitoring operation, including at least one of the following: a monitoring operation for a first uplink delay; a monitoring operation for a second uplink delay; a monitoring operation for a third uplink delay;
a downlink delay monitoring operation, including at least one of the following: a monitoring operation for a first downlink delay; a monitoring operation for a second downlink delay; a monitoring operation for a third downlink delay; and
a round trip delay monitoring operation, including at least one of the following: a monitoring operation for a first round trip delay, a monitoring operation for a second round trip delay, and a monitoring operation for a third round trip delay, where
the first round trip delay is a round trip delay between a terminal and an anchor gateway,
the second round trip delay is a round trip delay between a RAN network element and the anchor gateway,
the third round trip delay is a round trip delay between the terminal and the RAN network element,
the first uplink delay is an uplink delay from the terminal to the anchor gateway,
the first downlink delay is a downlink delay from the anchor gateway to the terminal,
the second uplink delay is an uplink delay from the RAN network element to the anchor gateway,
the second downlink delay is a downlink delay from the anchor gateway to the RAN,
the third uplink delay is an uplink delay from the terminal to the RAN network element, and
the third downlink delay is a downlink delay from the RAN network element to the terminal.

Optionally, the uplink delay monitoring operation, the monitoring operation for the first uplink delay, and/or the monitoring operation for the second uplink delay includes at least one of the following:
recording a T2 time, the T2 time being a time for receiving an uplink packet;
receiving a first uplink packet, packet header information of the first uplink packet including at least one of the following: a T1 time, a T11 time, and a third uplink delay;
determining the first uplink delay, including one of the following: obtaining the first uplink delay according to T2-T 11, and obtaining the first uplink delay according to T2-T1+the third uplink delay;
determining the second uplink delay, including: obtaining the second uplink delay according to T2-T1;
adding packet header information to a first downlink packet, the packet header information including at least one of the following: the T2 time, the first uplink delay, and packet header information of the uplink packet; and
transmitting the first downlink packet.

The T11 time is one of the following: a time that the RAN network element schedules a second uplink packet, and a time that the terminal transmits the second uplink packet; and
the T1 time is a transmitting time of the uplink packet.

Optionally, the downlink delay monitoring operation, the monitoring operation for the first downlink delay, and/or the monitoring operation for the second downlink delay includes at least one of the following:
adding packet header information to the first downlink packet, the packet header information including: a T3 time, the T3 time being a transmitting time of the first downlink packet; and
transmitting the first downlink packet.

Optionally, the round trip delay monitoring operation includes at least one of the following:
recording a T2 time, the T2 time being a time for receiving a first uplink packet;
receiving the first uplink packet, packet header information of the first uplink packet including at least one of the following: a T1 time, a T11 time, and a third uplink delay;
determining a first uplink delay, including one of the following: obtaining the first uplink delay according to T2-T 11, and obtaining the first uplink delay according to T2-T1+the third uplink delay;
adding at least one of the following pieces of packet header information to the first downlink packet: a T3 time, a T2 time, the first uplink delay, a second uplink delay, and packet header information of the first uplink packet; and
transmitting the first downlink packet, where
the T3 time is a transmitting time of the first downlink packet;
the T11 time is one of the following: a time that the RAN network element schedules a second uplink packet, and a time that the terminal transmits the second uplink packet; and
the T1 time is a transmitting time of the first uplink packet.

In an implementation, the second communication device may obtain the first information from the first source end. The first source end includes at least one of the following: a fourth communication device, a third CN network element (for example, but not limited to, an SMF network element).

According to the embodiments of the present application, the second communication device obtains the first information. The first information includes at least one of the following: delay monitoring configuration information; first QoS configuration information; and first indication information, so that the second communication device may perform a delay monitoring operation according to the first information to assist the RAN network element in achieving round trip delay guarantee.

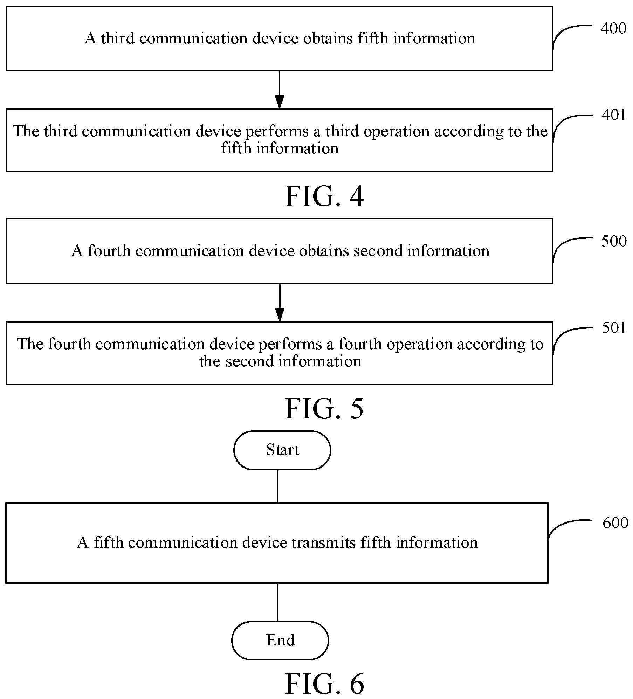

Please refer to FIG. 4, the embodiments of the present disclosure provide a QoS control method, applied to a third communication device. The third communication device includes, but is not limited to, a CN network element (for example, but not limited to, a PCF network element). When the second communication device is a CN network element, the CN network element may be referred to as a second CN network element. The method includes the following steps:
Step 400: The third communication device obtains fifth information.
Step 401: The third communication device performs a third operation according to the fifth information.

The performing a third operation includes at least one of the following:
determining second information; and
transmitting the second information.

Optionally, the second information includes at least one of the following: a delay monitoring policy, a first QoS policy, and first indication information;
the first indication information is used to indicate one of the following: performing delay guarantee according to a delay monitoring result and/or first QoS configuration information; and performing delay guarantee according to the delay monitoring result and/or a third round trip delay budget.

Optionally, the fifth information includes at least one of the following: description information of a first service data flow; a delay monitoring requirement; a first QoS requirement, the first QoS requirement being a QoS requirement of the first service data flow, where
the first QoS requirement includes at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay requirement.

In some optional embodiments, a step that the third communication device determines second information according to the fifth information includes:
in a case that the fifth information includes the first uplink delay requirement and the first downlink delay requirement, the third communication device maps a first uplink QoS requirement or a first uplink QoS budget according to the first uplink delay requirement, and the third communication device maps a first downlink QoS requirement or a first downlink QoS budget according to the first downlink delay requirement; or
in a case that the fifth information includes the first round trip delay requirement, the third communication device segments the first round trip delay requirement or a first round trip delay budget according to a preconfigured first round trip delay segmentation experience value or the delay monitoring result to obtain a first uplink QoS requirement or a first uplink QoS budget, and a first downlink QoS requirement or a first downlink QoS budget.

Optionally, the first QoS policy includes at least one of the following:
a first round trip delay budget;
a first uplink delay budget;
a first downlink delay budget;
a single direction delay budget;
fifth indication information, the fifth indication information being used to indicate one of the following: the first round trip delay budget being a value of twice the single direction delay budget, and the first round trip delay budget being the sum of the first uplink delay requirement and the first downlink delay budget;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay budget.

In an implementation, the delay budget is reflected by a delay budget parameter, or is represented by a QoS identifier (for example, a 5QI). Because a QoS identifier value is in one-to-one correspondence with the delay budget, the delay budget may be reflected.

In an implementation, the single direction delay budget represents a first uplink delay budget and/or a first downlink delay budget, and the first uplink delay budget is the same as the first downlink delay budget.

In some optional embodiments, the delay monitoring policy includes:
a delay required to be measured, including at least one of the following: a first uplink delay, a first downlink delay, a first round trip delay, a second uplink delay, a second downlink delay, and a second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway, the first downlink delay is a downlink delay from the anchor gateway to the terminal,
the second uplink delay is an uplink delay from the RAN network element to the anchor gateway, and
the second downlink delay is a downlink delay from the anchor gateway to the RAN network element.

Optionally, the delay required to be measured is one of the following: a delay that the RAN network element is responsible for calculating, and a delay that is measured by the anchor gateway and transmitted to the RAN network element.

Optionally, the first QoS policy is one of the following: a QoS policy of a first data tunnel, a QoS policy of a second data tunnel and/or a third data tunnel, and a QoS policy of a first service data flow;
and/or
the delay monitoring policy is one of the following: a delay monitoring policy of the first data tunnel, and a delay monitoring policy of the second data tunnel and/or the third data tunnel.

The first data tunnel is configured for uplink and/or downlink, the second data tunnel is configured for uplink, and the third data tunnel is configured for downlink.

In an implementation, the third communication device configures the delay monitoring policy for the first communication device or the second communication device according to a requirement of a fifth communication device.

In an implementation, the third communication device may transmit the second information to a first target end. The first target end includes at least one of the following: a fourth communication device, a third CN network element (for example, but not limited to, an SMF network element).

In an implementation, the second CN network element obtains the fifth information from a second source end. The second source end includes at least one of the following: the fifth communication device, a fourth CN network element (such as, but not limited to, an AF network element or an NEF network element).

According to the embodiments of the present application, the third communication device obtains the fifth information, and performs a third operation according to the fifth information. The performing a third operation includes at least one of the following: determining the second information; and transmitting the second information, the second information including at least one of the following: a delay monitoring policy, a first QoS policy, and first indication information, so that the second information may be transmitted to the fourth communication device to achieve round trip delay guarantee.

Please refer to FIG. 5, the embodiments of the present application further provide a QoS control method, applied to a fourth communication device. The fourth communication device includes, but is not limited to, a CN network element (for example, but not limited to, an SMF network element). When the second communication device is a CN network element, the CN network element may be referred to as a third CN network element. The method includes the following steps:
Step 500: The fourth communication device obtains second information, the second information including at least one of the following: a delay monitoring requirement or a delay monitoring policy, a first QoS requirement or a first QoS policy, and first indication information.
Step 501: The fourth communication device performs a fourth operation according to the second information. The performing a fourth operation includes at least one of the following:
   determining first information;
   transmitting the first information, where
   the first information includes at least one of the following:
   delay monitoring configuration information;
   first QoS configuration information; and
   the first indication information, the first indication information being used to indicate one of the following: performing delay guarantee according to a delay monitoring result and/or the first QoS configuration information; and performing delay guarantee according to the delay monitoring result and/or a third round trip delay budget.
The first QoS configuration information includes at least one of the following:
   a first round trip delay budget, a first uplink delay budget, and a first downlink delay budget;
   a third round trip delay budget, a third uplink delay budget, and a third downlink delay budget;
   a delay budget of a data tunnel;
   second indication information, the second indication information being used to indicate one of the following: the first round trip delay budget being a value of twice the delay budget of the data tunnel, and the first round trip delay budget being the sum of the first uplink delay budget and the first downlink delay budget;
   third indication information, the third indication information being used to indicate: an uplink delay budget being able to be different from a downlink delay budget, or an uplink delay budget being only able to be the same as a downlink delay budget; and
   fourth indication information, the fourth indication information being used to indicate: the first round trip delay being not able to exceed the first round trip delay requirement, where
   the delay monitoring configuration information includes at least one of the following:
   a delay required to be measured, including at least one of the following: a first uplink delay, a first downlink delay, a first round trip delay, a second uplink delay, a second downlink delay, and a second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

Optionally, the first QoS requirement includes at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay requirement.

Optionally, the first QoS policy includes at least one of the following:
a first round trip delay budget;
a first uplink delay budget;
a first downlink delay budget;
a single direction delay budget;
fifth indication information, the fifth indication information being used to indicate one of the following: the first round trip delay budget being a value of twice the single direction delay budget, and the first round trip delay budget being the sum of the first uplink delay requirement and the first downlink delay budget;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay budget.

Optionally, the delay monitoring requirement or the delay monitoring policy includes at least one of the following:
a delay required to be measured, including at least one of the following: a first uplink delay, a first downlink delay, a first round trip delay, a second uplink delay, a second downlink delay, and a second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway, the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

Optionally, the delay required to be measured is one of the following: a delay that the RAN network element is responsible for calculating, and a delay that is measured by the anchor gateway and transmitted to the RAN network element.

Optionally, the first QoS configuration information is one of the following: QoS configuration information of a first data tunnel, and QoS configuration information of a second data tunnel and/or a third data tunnel;
and/or
the delay monitoring configuration information is one of the following: delay monitoring configuration information of the first data tunnel, and delay monitoring configuration information of the second data tunnel and/or the third data tunnel.
the first data tunnel is configured for uplink and/or downlink, the second data tunnel is configured for uplink, and the third data tunnel is configured for downlink.

In an implementation, the fourth communication device may transmit the first information to a second target end. The second target end includes at least one of the following: a first communication device, a RAN network element, a second communication device, and a first CN network element (such as, but not limited to, an anchor gateway).

In an implementation, the fourth communication device obtains the second information from a third source end. The third source end includes at least one of the following: a third communication device, and a second CN network element (such as, but not limited to, a PCF network element).

According to the embodiments of the present application, the fourth communication device obtains the second information, and determines and/or transmits the first information, so that the first communication device performs the delay guarantee according to the first information or the second communication device performs a delay monitoring operation according to the first information, thereby implementing round trip delay guarantee.

Please refer to FIG. 6, the embodiments of the present application further provide a QoS control method, applied to a fifth communication device. The fifth communication device includes, but is not limited to, a CN network element (such as, but not limited to, an AF network element and an NEF network element). When the second communication device is a CN network element, the CN network element may be referred to as a fourth CN network element.

The method includes the following steps:
Step 600: A fifth communication device transmits fifth information, the fifth information including at least one of the following: description information of a first service data flow; a delay monitoring requirement; and a first QoS requirement, the first QoS requirement being a QoS requirement of the first service data flow.

The first QoS requirement includes at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay requirement.

The delay monitoring requirement includes at least one of the following:
a delay required to be measured, including at least one of the following: a first uplink delay, a first downlink delay, a first round trip delay, a second uplink delay, a second downlink delay, and a second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway, the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

In an implementation, the first round trip delay is a sum of the first uplink delay and the first downlink delay.

A first uplink delay requirement is used to request to guarantee that a first uplink delay of the first service data flow does not exceed the first uplink delay requirement;
a first downlink delay requirement is used to request to guarantee that a first downlink delay of the first service data flow does not exceed the first downlink delay requirement; and
a first round trip delay requirement is used to request to guarantee that a first round trip delay of the first service data flow does not exceed the first round trip delay requirement.

The first round trip delay requirement is a value of twice the single direction delay budget, and the first round trip delay requirement being a sum of the first uplink delay requirement and the first downlink delay requirement.

In an implementation, the fifth communication device transmits the fifth information to a third target end. The third target end includes at least one of the following: a third communication device, a second CN network element (such as, but not limited to, a PCF network element).

In the embodiments of this application, the fifth communication device transmits the fifth information. The fifth information includes at least one of the following: description information of a first service data flow; a delay monitoring requirement; and a first QoS requirement, the first QoS requirement being a QoS requirement of the first service data flow and assisting in implementing round trip delay guarantee.

The QoS control method in the embodiments of the present application is described below with reference to specific application scenarios.

Application scenario 1 in the embodiments of the present application mainly describes the following processes:
When a RAN network element performs round trip delay control, if the RAN obtains a round trip delay (a first round trip delay) budget from a UE to an anchor gateway or requires that a round trip delay does not exceed twice a delay budget of a data tunnel, a method is that the RAN network element determines a delay (a third round trip delay) budget between the UE and the RAN network element by monitoring round trip delay (second round trip delay) overhead of N3, so that a sum of the first uplink delay overhead and the second downlink delay overhead cannot exceed the first round trip delay budget.

An AF network element provides 1/2 a round trip delay budget to require a PCF network element to map 5QI, and adjusts an uplink delay budget and a downlink delay budget by monitoring and measuring an uplink delay and a downlink delay when a required single direction (uplink or downlink) exceeds 1/2 a round trip delay, so that a sum of an uplink delay budget and a downlink delay budget cannot exceed the round trip delay budget (that is, twice the QoS flow delay budget).

The anchor gateway (for example, a UPF network element) cooperates with the RAN network element to perform delay measurement or monitoring (for example, the UPF network element transmits a downlink measurement packet to notify the RAN network element only when discovering that the uplink delay is excessive).

The RAN network element or the UPF network element may start the delay monitoring only in a case that a first condition is met. The first condition includes at least one of the following:
the first uplink delay exceeds one of the following: a delay budget of a data tunnel, 1/2 a first round trip delay budget, and a first uplink delay budget;
the first downlink delay exceeds one of the following: a delay budget of a data tunnel, 1/2 a first round trip delay budget, and a first downlink delay budget;
the third uplink delay exceeds one of the following: a delay budget between a terminal and the RAN network element of the data tunnel, 1/2 the third round trip delay budget, and the third uplink delay budget; and
the third downlink delay exceeds one of the following: a delay budget between a terminal and the RAN network element of the data tunnel, 1/2 the first round trip delay budget, and the third downlink delay budget.

The PCF network element configures the foregoing delay measurement monitoring policy for the RAN network element and the UPF network element according to a requirement of the AF network element.

In an implementation, the AF may directly request a differential first uplink delay requirement and a differential first downlink delay requirement (that is, an uplink delay requirement is different from the first downlink delay requirement). The PCF network element and the SMF network element directly map the uplink QoS and the downlink QoS to the RAN network element.

Alternatively, in another implementation, the AF requests one first round trip delay requirement. The PCF network element and the SMF network element directly map the first round trip delay to the RAN network element. Alternatively, the PCF maps a QoS 5QI by dividing the first round trip delay by 2, and indicates that the uplink and downlink delays cannot exceed the first round trip delay requirement.

The first round trip delay requirement is split into the uplink delay requirement and a first downlink delay requirement by the RAN network element. The uplink and downlink delay requirements do not exceed the first round trip delay requirement.

The PCF needs to generate a delay monitoring policy and a first QoS policy. The SMF generates delay monitoring configuration information and first QoS configuration information according to the delay monitoring requirement or the delay monitoring policy, the first QoS requirement, or the first QoS policy.

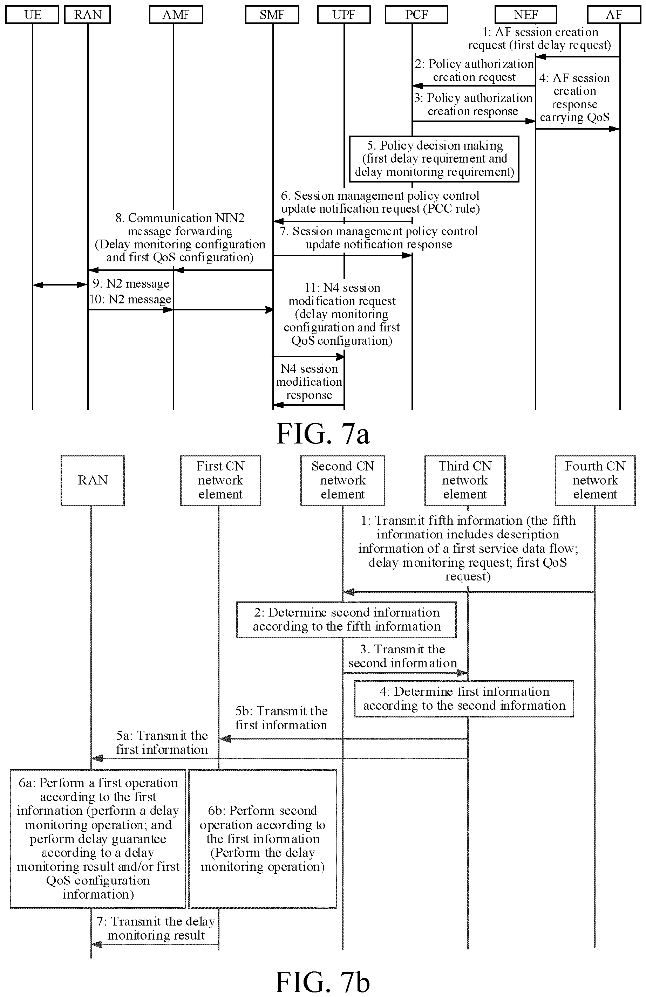

Please refer to FIG. 7a, the method includes the following steps:
Step 1: An AF transmits fifth information to a 5GS. The fifth information includes at least one of the following: description information of a first service data flow; a delay monitoring requirement; and a first QoS requirement, the first QoS requirement being a QoS requirement of the first service data flow. The first QoS requirement includes at least one of the following: a first round trip delay requirement; a first uplink delay requirement; a first downlink delay requirement; a single direction delay budget; fifth indication information, the fifth indication information being used to indicate one of the following: the first round trip delay requirement being a value of twice the single direction delay budget, and the first round trip delay requirement being a sum of the first uplink delay requirement and the first downlink delay requirement; sixth indication information, the sixth indication information being used to indicate: an uplink delay budget being able to be different from a downlink delay budget, or an uplink delay budget being only able to be the same as a downlink delay budget; and seventh indication information, the seventh indication information being used to indicate: a first round trip delay being not able to exceed the first round trip delay requirement.

The first uplink delay requirement is a delay requirement for data packet transmission from a UE to a UPF N6 port. The first downlink delay requirement is a delay requirement for the UPF N6 port to receive the data packet and transmit the data packet to the UE. The first round trip delay requirement is a sum of the first uplink delay requirement and the first downlink delay requirement.

Step 5: The PCF determines a delay monitoring policy and/or a first QoS policy according to at least one of the delay monitoring requirement, the first QoS requirement, and the description information of the first service data flow.

In a case that the first QoS requirement includes the first uplink delay requirement and the first downlink delay requirement, the PCF maps the first uplink QoS requirement or the first uplink QoS budget according to the first uplink delay requirement, and the third communication device maps the first downlink QoS requirement or the first downlink QoS budget according to the first downlink delay requirement.

In a case that the first QoS requirement includes one first round trip delay requirement, the PCF may segment the first round trip delay requirement into an uplink QoS requirement and a downlink QoS requirement according to a preconfigured first round trip delay segmentation experience value or a QoS monitoring result. For example, in a gaming service, an uplink packet is relatively small, and is usually an action packet of a user. Picture flutter can only be avoided and a delay budget can be reduced by transmitting the uplink packet to a server as soon as possible. A downlink data packet is relatively large, and is usually a background picture and a status packet of a game, and a delay budget requirement may be relatively high.

Step 6: The PCF network element transmits second information to an SMF network element. The second information includes at least one of the following: a delay monitoring policy, first QoS policy, and first indication information.

Step 7: The SMF network element determines second information. The second information includes at least one of the following: a delay monitoring requirement or a delay monitoring policy, and a first QoS requirement or a first QoS policy. The first indication information determines a first QoS configuration, and determines first information. The first information includes at least one of the following: delay monitoring configuration information; first QoS configuration information; and the first indication information, the first indication information being used to indicate one of the following: performing delay guarantee according to a delay monitoring result and/or the first QoS configuration information; and performing delay guarantee according to the delay monitoring result and/or a third round trip delay budget.

Step 8: The SMF transmits the first information to the RAN network element through an AMF. Alternatively, the SMF transmits the first information to the anchor gateway.

Step 9: The RAN network element performs at least one of the following operations according to the first information:
determining at least one of the following: a third round trip delay budget, a third uplink delay budget, and a third downlink delay budget;
determining a first round trip delay budget as one of the following: a value of twice a delay budget of a data tunnel, the first round trip delay budget in the first QoS configuration information, and a sum of a first uplink delay budget and a first downlink delay budget;
performing a delay monitoring operation; and
performing delay guarantee according to the delay monitoring result and/or the first QoS configuration information.

FIG. 7b is a second schematic diagram of interaction in the QoS control method according to the embodiments of this application. As shown in FIG. 7b, the QoS control method includes:
Step 1: The fourth CN network element transmits fifth information to the second CN network element (the fifth information includes at least one of the following: description information of a first service data flow; a delay monitoring requirement; and a first QoS requirement).
Step 2: The second CN network element determines second information according to the fifth information.
Step 3: The second CN network element transmits the second information to the third CN network element.
Step 4: The third CN network element determines the first information according to the second information.
Step 5a: The third CN network element transmits the first information to the RAN network element.

Optionally, step 5b: The third CN network element transmits the first information to the first CN network element.

Step 6a: The RAN network element performs a first operation according to the first information.

Optionally, step 6b: The first CN network element performs a second operation according to the first information.

Step 7: The first CN network element transmits a delay monitoring result to the RAN network element to assist the RAN network element in performing delay guarantee according to the delay monitoring result and/or the first QoS configuration information.

For the first information, the second information, the fifth information, the first operation, the second operation, the delay monitoring result, and the first QoS configuration information, reference may be made to the descriptions in the foregoing embodiments. Details are not described herein again.

The QoS control method provided in the embodiments of this application may be implemented by a QoS control apparatus. In the embodiments of this application, a QoS control apparatus provided by the embodiments of the this application are described by taking an example in which the QoS control apparatus performs a QoS control method.

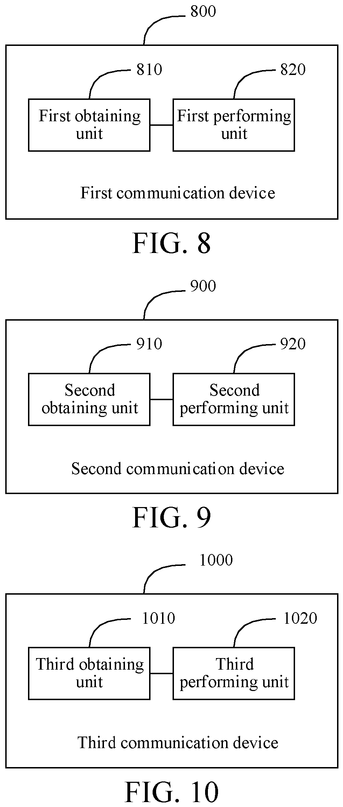

FIG. 8 is a schematic structural diagram of a first communication device according to an embodiment of this application. As shown in FIG. 8, the first communication device 800 includes:
a first obtaining unit 810, configured to obtain first information;
a first performing unit 820, configured to perform a first operation according to the first information.

The first information includes at least one of the following:
delay monitoring configuration information;
first QoS configuration information; and
the first indication information, the first indication information being used to indicate one of the following: performing delay guarantee according to a delay monitoring result and/or the first QoS configuration information; and performing delay guarantee according to the delay monitoring result and/or a third round trip delay budget,

The performing a first operation includes at least one of the following:
determining at least one of the following: a third round trip delay budget, a third uplink delay budget, and a third downlink delay budget;
determining a first round trip delay budget as one of the following: a value of twice a delay budget of a data tunnel, the first round trip delay budget in the first QoS configuration information, and a sum of a first uplink delay budget and a first downlink delay budget;
performing a delay monitoring operation; and
performing delay guarantee according to a delay monitoring result and/or the first QoS configuration information.

The first QoS configuration information includes at least one of the following:
a first round trip delay budget, a first uplink delay budget, and a first downlink delay budget;
a third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate: a round trip delay being not able to exceed a round trip delay budget.

The first round trip delay budget is the round trip delay budget between a terminal and an anchor gateway;
the first uplink delay budget is the uplink delay budget from the terminal to the anchor gateway;
the first downlink delay budget is the downlink delay budget from the anchor gateway to the terminal;
the third uplink delay budget is the uplink delay budget from the terminal to a RAN network element;
the third downlink delay budget is the downlink delay budget from the RAN network element to the terminal; and
the third round trip delay budget is the round trip delay budget between the terminal and the RAN network element.

In some optional embodiments, the delay monitoring configuration information includes:
a delay required to be measured, including at least one of the following: a first uplink delay, a first downlink delay, a first round trip delay, a second uplink delay, a second downlink delay, and a second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

In some optional embodiments, the delay required to be measured is one of the following: a delay that the RAN network element is responsible for calculating, and a delay that is calculated by the anchor gateway and transmitted to the RAN network element.

In an implementation, an Nth uplink delay is responsible for the RAN network element to calculate, an Nth downlink delay is responsible for the RAN network element to calculate, an Nth round trip delay is responsible for the RAN network element to calculate, and N may be one of the following values: 1, 2.

In an implementation, the Nth uplink delay is calculated by the anchor gateway and sent to the RAN network element, the Nth downlink delay is calculated by the anchor gateway and sent to the RAN network element, and the Nth round trip delay is calculated by the anchor gateway and sent to the RAN network element. N may be one of the following values: 1, 2.

In some optional embodiments, the first QoS configuration information is one of the following: QoS configuration information of a first data tunnel, and QoS configuration information of a second data tunnel and/or a third data tunnel;
and/or
the delay monitoring configuration information is one of the following: delay monitoring configuration information of the first data tunnel, and delay monitoring configuration information of the second data tunnel and/or the third data tunnel.

The first data tunnel is configured for uplink and/or downlink, the second data tunnel is configured for uplink, and the third data tunnel is configured for downlink.

In an implementation, uplink delay related information (for example, the first uplink delay and the second uplink delay) in the first QoS configuration information and/or the delay budget of the data tunnel is the QoS configuration information of the second data tunnel, and downlink delay related information (for example, the first downlink delay and the second downlink delay) in the first QoS configuration information and/or the delay budget of the data tunnel is the QoS configuration information of the third data tunnel. At least one of the round trip delay related information (such as the first round trip delay and the second round trip delay), the second indication information, the third indication information, and the fourth indication information in the first QoS configuration information is QoS configuration information common to the second data tunnel and the third data tunnel.

In some optional embodiments, the delay monitoring operation includes at least one of the following:
an uplink delay monitoring operation, including at least one of the following: a monitoring operation for a first uplink delay; a monitoring operation for a second uplink delay; a monitoring operation for a third uplink delay;
a downlink delay monitoring operation, including at least one of the following: a monitoring operation for a first downlink delay; a monitoring operation for a second downlink delay; a monitoring operation for a third downlink delay; and
a round trip delay monitoring operation, including at least one of the following: a monitoring operation for a first round trip delay, a monitoring operation for a second round trip delay, and a monitoring operation for a third round trip delay.

The first round trip delay is a round trip delay between a terminal and an anchor gateway,
the second round trip delay is a round trip delay between a RAN network element and the anchor gateway,
the third round trip delay is a round trip delay between the terminal and the RAN network element,
the first uplink delay is an uplink delay from the terminal to the anchor gateway,
the first downlink delay is a downlink delay from the anchor gateway to the terminal,
the second uplink delay is an uplink delay from the RAN network element to the anchor gateway,
the second downlink delay is a downlink delay from the anchor gateway to the RAN,
the third uplink delay is an uplink delay from the terminal to the RAN network element, and
the third downlink delay is a downlink delay from the RAN network element to the terminal.

In some optional embodiments, the performing a delay monitoring operation, and/or, performing delay guarantee according to the delay monitoring result and/or the first QoS configuration information includes:
performing the delay monitoring operation in a case that a first condition is satisfied, and/or performing the delay guarantee according to the delay monitoring result and/or the first QoS configuration information, where
the first condition includes at least one of the following:
   the first uplink delay exceeds one of the following: a delay budget of a data tunnel, 1/2 a first round trip delay budget, and a first uplink delay budget;
   the first downlink delay exceeds one of the following: a delay budget of a data tunnel, 1/2 a first round trip delay budget, and a first downlink delay budget;
   the third uplink delay exceeds one of the following: a delay budget between a terminal and the RAN network element of the data tunnel, 1/2 the third round trip delay budget, and the third uplink delay budget; and
   the third downlink delay exceeds one of the following: a delay budget between a terminal and the RAN network element of the data tunnel, 1/2 the first round trip delay budget, and the third downlink delay budget.

In some optional embodiments, the first condition further includes at least one of the following:
a sum of the first uplink delay and a first downlink delay does not exceed a first round trip delay budget; and
a sum of the third uplink delay and the third downlink delay does not exceed a third round trip delay budget.

In some optional embodiments, the performing delay guarantee according to the delay monitoring result and/or the first QoS configuration information includes at least one of the following:
determining or adjusting, according to the delay monitoring result and/or the round trip delay budget, at least one of the following: an uplink delay budget, a downlink delay budget, and a third round trip delay budget;
guaranteeing that the first round trip delay does not exceed the first round trip delay budget;
guaranteeing that the first uplink delay does not exceed the first uplink delay budget;
guaranteeing that the first downlink delay does not exceed the first downlink delay budget;
guaranteeing that the third round trip delay does not exceed the third round trip delay budget;
guaranteeing that the third uplink delay does not exceed the third uplink delay budget;
guaranteeing that the third downlink delay does not exceed the third downlink delay budget;
guaranteeing that the second round trip delay does not exceed the second round trip delay budget;
guaranteeing that the second uplink delay does not exceed the second uplink delay budget; and
guaranteeing that the second downlink delay does not exceed the second downlink delay budget.

The delay monitoring result includes at least one of the following: an uplink delay monitoring result, a downlink delay monitoring result, and a round trip delay monitoring result.

The round trip delay budget includes at least one of the following: a first round trip delay budget, a second round trip delay budget, and a third round trip delay budget.

In an implementation, the uplink delay monitoring result includes at least one of the following: a first uplink delay monitoring result; a second uplink delay monitoring result; and the third uplink delay monitoring result.

In an implementation, the downlink delay monitoring result includes at least one of the following: a first downlink delay monitoring result; a second downlink delay monitoring result; and the third downlink delay monitoring result.

In an implementation, the round trip delay monitoring result includes at least one of the following: a first round trip delay monitoring result, a second round trip delay monitoring result, and a third round trip delay monitoring result.

In an implementation, the uplink delay budget includes at least one of the following: a first uplink delay budget; a second uplink delay budget; and a third uplink delay budget.

In an implementation, the downlink delay budget includes at least one of the following: a first downlink delay budget; a second downlink delay budget; and a third downlink delay budget.

In some optional embodiments, the determining or adjusting an uplink delay budget, a downlink delay budget, and/or a third round trip delay budget according to the delay monitoring result and/or the round trip delay budget includes at least one of the following:
determining or adjusting the first uplink delay budget and/or the first downlink delay budget according to at least one of the first round trip delay budget, the first round trip delay monitoring result, the first uplink delay monitoring result, and the first downlink delay monitoring result;
determining or adjusting, according to at least one of the first round trip delay budget, the first round trip delay monitoring result, the second uplink delay monitoring result, the second downlink delay monitoring result, the third uplink delay monitoring result, and the third downlink delay monitoring result, at least one of the following: a third uplink delay budget, and a third downlink delay budget; and
determining or adjusting the third round trip delay budget according to at least one of the first round trip delay budget, the first round trip delay monitoring result, the second round trip delay monitoring result, the second uplink delay monitoring result, and the second downlink delay monitoring result.

In some optional embodiments, the monitoring operation for the first uplink delay includes at least one of the following:
recording a T11 time;
recording a T1 time;
determining a third uplink delay;
adding packet header information to the first uplink packet, the packet header information including at least one of the following: the T1 time, the T11 time, and the third uplink delay;
transmitting the first uplink packet;
receiving a first downlink packet, packet header information of the first downlink packet including at least one of the following: a T2 time, a first uplink delay, a second uplink delay, and the packet header information of the first uplink packet; and
determining the first uplink delay, including one of the following: obtaining the first uplink delay through T2-T1+the third uplink delay, obtaining the first uplink delay T2-T11, the second uplink delay+the third uplink delay, and directly obtaining the first uplink delay from the packet header information of the first downlink packet.

The T11 time is one of the following: a time that the RAN network element schedules a second uplink packet, and a time that the terminal transmits the second uplink packet;
the T1 time is a transmitting time of the first uplink packet; and
the T2 time is a receiving time of the first uplink packet.

In some optional embodiments, the monitoring operation for the first downlink delay includes at least one of the following:
receiving a first downlink packet, packet header information of the first downlink packet including: a T3 time;
recording a T4 time;
determining a third downlink delay; and
determining a first downlink delay, including: T4-T3+the third downlink delay.

The T3 time is a transmitting time of the first downlink packet; and
the T4 time is a receiving time of the first downlink packet.

In some optional embodiments, the monitoring operation for the first round trip delay includes at least one of the following:
recording a T11 time;
recording a T1 time;
determining a third uplink delay;
adding packet header information to the first uplink packet, the packet header information including at least one of the following: the T1 time, the T11 time, and the third uplink delay;
transmitting the first uplink packet;
receiving a first downlink packet, packet header information of the downlink packet including at least one of the following: a T2 time, a T3 time, a first uplink delay, a second uplink delay, and packet header information of the first uplink packet; and
determining the first round trip delay, including one of the following: obtaining the first round trip delay through ((T2-T1)+(T4-T3)+the third downlink delay+the third uplink delay), obtaining the first round trip delay through ((T2-T11)+(T4-T3)+the third downlink delay), obtaining the first round trip delay through (the second uplink delay+(T4-T3)+the third downlink delay+the third uplink delay), and obtaining the first round trip delay through (the first uplink delay+(T4-T3)+the third downlink delay).

The T11 time is one of the following: a time that the RAN network element schedules a second uplink packet, and a time that the terminal transmits the second uplink packet;
the T1 time is a transmitting time of the first uplink packet;
the T2 time is a receiving time of the first uplink packet;
the T3 time is a transmitting time of the first downlink packet; and
the T4 time is a receiving time of the first downlink packet.

In some optional embodiments, the monitoring operation for the second uplink delay includes at least one of the following:
recording a T1 time;
adding packet header information to the first uplink packet, the packet header information including at least one of the following: the T 1 time;
transmitting the first uplink packet;
receiving a first downlink packet, packet header information of the first downlink packet including at least one of the following: a T2 time, a second uplink delay; and
determining the second uplink delay, including one of the following: obtaining the second uplink delay through T2-T1, and reading the second uplink delay from a packet header of the first downlink packet.

The T1 time is a transmitting time of the first uplink packet; and
the T2 time is a receiving time of the first uplink packet.

In some optional embodiments, the monitoring operation for the second downlink delay includes at least one of the following:
receiving a first downlink packet, packet header information of the first downlink packet including a T3 time, and the T3 time being a transmitting time of the first downlink packet;
recording a T4 time, the T4 time being a receiving time of the first downlink packet; and
determining a second downlink delay, including: obtaining the second downlink delay according to T4-T3.

In some optional embodiments, the monitoring operation for the second round trip delay includes at least one of the following:
recording a T1 time;
adding packet header information to the first uplink packet, the packet header information including at least one of the following: information configured to measure a delay of the first uplink packet, and a T 1 time;
transmitting the first uplink packet;
receiving a first downlink packet, packet header information of the first downlink packet including at least one of the following: a T2 time, a T3 time, the T1 time, the second uplink delay, and the packet header information of the first uplink packet;
recording a T4 time, the T4 time being a receiving time of the first downlink packet;
determining the second round trip delay, including one of the following: obtaining the second round trip delay according to (T4-T3)+(T2-T1), and obtaining the second round trip delay according to (T4-T3)+the second uplink delay.

The T1 time is a transmitting time of the first uplink packet,
the T2 time is a receiving time of the first uplink packet, and
the T3 time is a transmitting time of the first downlink packet.

In some optional embodiments, the determining or adjusting at least one of the first uplink delay budget and the first downlink delay budget according to the delay monitoring result and/or the round trip delay budget includes at least one of the following:
determining the first uplink delay according to a second uplink delay monitoring result and a third uplink delay monitoring result, and determining or adjusting at least one of the first uplink delay budget and the first downlink delay budget according to the first uplink delay and the first round trip delay budget; and
determining the first downlink delay according to a second downlink delay monitoring result and a third downlink delay monitoring result, and determining or adjusting at least one of the first uplink delay budget and the first downlink delay budget according to the first downlink delay and the first round trip delay budget.

In some optional embodiments, the determining or adjusting the third round trip delay budget according to the delay monitoring result and/or the round trip delay budget includes at least one of the following:
determining the third round trip delay budget according to the second round trip delay monitoring result and the first round trip delay budget; and
determining the third uplink delay budget and/or the third downlink delay budget according to the second round trip delay monitoring result and the first round trip delay budget.

In some optional embodiments, the guaranteeing that the first round trip delay does not exceed the first round trip delay budget includes at least one of the following:
a sum of the third uplink delay and the third downlink delay does not exceed a first value, where
the first value is a difference between the first round trip delay budget and the second round trip delay monitoring result.

In some optional embodiments, the guaranteeing that the first uplink delay does not exceed the first uplink delay budget includes at least one of the following:
the third uplink delay or the third uplink delay budget does not exceed a second value, where
the second value is a difference between the first uplink delay budget and the second uplink delay monitoring result, or a value obtained by subtracting a third uplink delay monitoring result from a difference between the first round trip delay budget and the second round trip delay monitoring result, or a value obtained by subtracting the third uplink delay budget from the difference between the first round trip delay budget and the second round trip delay monitoring result.

In some optional embodiments, the guaranteeing that the first downlink delay does not exceed the first downlink delay budget includes at least one of the following:
the third downlink delay or the third uplink delay budget does not exceed a third value, where
the third value is a difference between the first downlink delay budget and the second downlink delay monitoring result, or a value obtained by subtracting a third uplink delay monitoring result from a difference between the first round trip delay budget and the second round trip delay monitoring result, or a value obtained by subtracting the third uplink delay budget from a difference between the first round trip delay budget and the first round trip delay monitoring result.

The first communication device according to an embodiment of this application can implement all processes implemented by the method embodiment in FIG. 2 and achieve the same technical solutions. To avoid repetition, details are not described herein again.

FIG. 9 is a schematic structural diagram of a second communication device according to an embodiment of this application. As shown in FIG. 9, the second communication device 900 includes:
a second obtaining unit 910, configured to obtain first information; and
a second performing unit 920, configured to perform a second operation according to the first information.

The first information includes at least one of the following:
delay monitoring configuration information;
first QoS configuration information; and
the first indication information, the first indication information being used to indicate one of the following: performing delay guarantee according to a delay monitoring result and/or the first QoS configuration information; and performing delay guarantee according to the delay monitoring result and/or a third round trip delay budget.

The second operation includes at least one of the following:
a delay monitoring operation.

The first QoS configuration information includes at least one of the following:
a first round trip delay budget, a first uplink delay budget, and a first downlink delay budget;
a third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate: a round trip delay being not able to exceed a round trip delay budget.

Optionally, the delay monitoring configuration information includes:
a delay required to be measured, including at least one of the following: a first uplink delay, a first downlink delay, a first round trip delay, a second uplink delay, a second downlink delay, and a second round trip delay, where
the first round trip delay is a round trip delay between a terminal and an anchor gateway,
the second round trip delay is a round trip delay between a RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

Optionally, the delay required to be measured is one of the following: a delay that the RAN network element is responsible for calculating, and a delay that is measured by the anchor gateway and transmitted to the RAN network element.

Optionally, the first QoS configuration information is one of the following: QoS configuration information of a first data tunnel, and QoS configuration information of a second data tunnel and/or a third data tunnel;
and/or
the delay monitoring configuration information is one of the following: delay monitoring configuration information of the first data tunnel, and delay monitoring configuration information of the second data tunnel and/or the third data tunnel.

The first data tunnel is configured for uplink and/or downlink, the second data tunnel is configured for uplink, and the third data tunnel is configured for downlink.

Optionally, the delay monitoring operation includes at least one of the following:
an uplink delay monitoring operation, including at least one of the following: a monitoring operation for a first uplink delay; a monitoring operation for a second uplink delay; a monitoring operation for a third uplink delay;
a downlink delay monitoring operation, including at least one of the following: a monitoring operation for a first downlink delay; a monitoring operation for a second downlink delay; a monitoring operation for a third downlink delay; and
a round trip delay monitoring operation, including at least one of the following: a monitoring operation for a first round trip delay, a monitoring operation for a second round trip delay, and a monitoring operation for a third round trip delay.

The first round trip delay is a round trip delay between a terminal and an anchor gateway,
the second round trip delay is a round trip delay between a RAN network element and the anchor gateway,
the third round trip delay is a round trip delay between the terminal and the RAN network element,
the first uplink delay is an uplink delay from the terminal to the anchor gateway,
the first downlink delay is a downlink delay from the anchor gateway to the terminal,
the second uplink delay is an uplink delay from the RAN network element to the anchor gateway,
the second downlink delay is a downlink delay from the anchor gateway to the RAN,
the third uplink delay is an uplink delay from the terminal to the RAN network element, and
the third downlink delay is a downlink delay from the RAN network element to the terminal.

Optionally, the uplink delay monitoring operation, the monitoring operation for the first uplink delay, and/or the monitoring operation for the second uplink delay includes at least one of the following:
recording a T2 time, the T2 time being a time for receiving an uplink packet;
receiving a first uplink packet, packet header information of the first uplink packet including at least one of the following: a T1 time, a T11 time, and a third uplink delay;
determining the first uplink delay, including one of the following: obtaining the first uplink delay according to T2-T 11, and obtaining the first uplink delay according to T2-T1+the third uplink delay;
determining the second uplink delay, including: obtaining the second uplink delay according to T2-T1;
adding packet header information to a first downlink packet, the packet header information including at least one of the following: the T2 time, the first uplink delay, and packet header information of the uplink packet; and
transmitting the first downlink packet.

The T11 time is one of the following: a time that the RAN network element schedules a second uplink packet, and a time that the terminal transmits the second uplink packet; and
the T1 time is a transmitting time of the uplink packet.

Optionally, the downlink delay monitoring operation, the monitoring operation for the first downlink delay, and/or the monitoring operation for the second downlink delay includes at least one of the following:
adding packet header information to the first downlink packet, the packet header information including: a T3 time, the T3 time being a transmitting time of the first downlink packet; and
transmitting the first downlink packet.

Optionally, the round trip delay monitoring operation includes at least one of the following:
recording a T2 time, the T2 time being a time for receiving a first uplink packet; and
receiving the first uplink packet, packet header information of the first uplink packet including at least one of the following: a T1 time, a T11 time, and a third uplink delay;
determining the first uplink delay, including one of the following: obtaining the first uplink delay according to T2-T 11, and obtaining the first uplink delay according to T2-T1+the third uplink delay;
adding at least one of the following pieces of packet header information to the first downlink packet: a T3 time, a T2 time, a first uplink delay, a second uplink delay, and packet header information of the first uplink packet; and
transmitting the first downlink packet.

The T3 time is a transmitting time of the first downlink packet;
the T11 time is one of the following: a time that the RAN network element schedules a second uplink packet, and a time that the terminal transmits the second uplink packet; and
the T1 time is a transmitting time of the first uplink packet.

The second communication device according to an embodiment of this application can implement all processes implemented by the method embodiment in FIG. 3 and achieve the same technical solutions. To avoid repetition, details are not described herein again.

FIG. 10 is a schematic structural diagram of a third communication device according to an embodiment of this application. As shown in FIG. 10, a third communication device 1000 includes:
a third obtaining unit 1010, configured to obtain fifth information; and
a third performing unit 1020, configured to perform a third operation according to the fifth information.

The performing a third operation includes at least one of the following:
determining second information; and
transmitting the second information.

The second information includes at least one of the following: a delay monitoring policy, a first QoS policy, and first indication information;
the first indication information is used to indicate one of the following: performing delay guarantee according to a delay monitoring result and/or the first QoS configuration information; and performing delay guarantee according to the delay monitoring result and/or a third round trip delay budget.

The fifth information includes at least one of the following: description information of a first service data flow; a delay monitoring requirement; and a first QoS requirement, the first QoS requirement being a QoS requirement of the first service data flow.

The first QoS requirement includes at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay requirement.

Optionally, the determining, by the third communication device, second information according to the fifth information includes:
in a case that the fifth information includes the first uplink delay requirement and the first downlink delay requirement, the third communication device maps a first uplink QoS requirement or a first uplink QoS budget according to the first uplink delay requirement, and the third communication device maps a first downlink QoS requirement or a first downlink QoS budget according to the first downlink delay requirement; or
in a case that the fifth information includes the first round trip delay requirement, the third communication device segments the first round trip delay requirement or a first round trip delay budget according to a preconfigured first round trip delay segmentation experience value or the delay monitoring result to obtain a first uplink QoS requirement or a first uplink QoS budget, and a first downlink QoS requirement or a first downlink QoS budget.

Optionally, the first QoS policy includes at least one of the following:
a first round trip delay budget;
a first uplink delay budget;
a first downlink delay budget;
a single direction delay budget;
fifth indication information, the fifth indication information being used to indicate one of the following: the first round trip delay budget being a value of twice the single direction delay budget, and the first round trip delay budget being the sum of the first uplink delay requirement and the first downlink delay budget;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay budget.

In an implementation, the delay budget is reflected by a delay budget parameter, or is represented by a QoS identifier (for example, a 5QI). Because a QoS identifier value is in one-to-one correspondence with the delay budget, the delay budget may be reflected by the QoS identifier.

In an implementation, the single direction delay budget represents a first uplink delay budget and/or a first downlink delay budget, and the first uplink delay budget is the same as the first downlink delay budget.

Optionally, the delay monitoring policy includes at least one of the following:
a delay required to be measured, including at least one of the following: a first uplink delay, a first downlink delay, a first round trip delay, a second uplink delay, a second downlink delay, and a second round trip delay,
the first round trip delay is a round trip delay between a terminal and an anchor gateway,
the second round trip delay is a round trip delay between a RAN network element and the anchor gateway,
the first uplink delay is an uplink delay from the terminal to the anchor gateway, the first downlink delay is a downlink delay from the anchor gateway to the terminal,
the second uplink delay is an uplink delay from the RAN network element to the anchor gateway, and
the second downlink delay is a downlink delay from the anchor gateway to the RAN network element.

Optionally, the delay required to be measured is one of the following: a delay that the RAN network element is responsible for calculating, and a delay that is measured by the anchor gateway and transmitted to the RAN network element.

Optionally, the first QoS policy is one of the following: a QoS policy of a first data tunnel, a QoS policy of a second data tunnel and/or a third data tunnel, and a QoS policy of a first service data flow;
and/or
the delay monitoring policy is one of the following: a delay monitoring policy of the first data tunnel, and a delay monitoring policy of the second data tunnel and/or the third data tunnel, where
the first data tunnel is configured for uplink and/or downlink, the second data tunnel is configured for uplink, and the third data tunnel is configured for downlink.

In an implementation, the third communication device configures the delay monitoring policy for the first communication device or the second communication device according to a requirement of a fifth communication device.

The third communication device according to an embodiment of this application can implement all processes implemented by the method embodiment in FIG. 4 and achieve the same technical solutions. To avoid repetition, details are not described herein again.

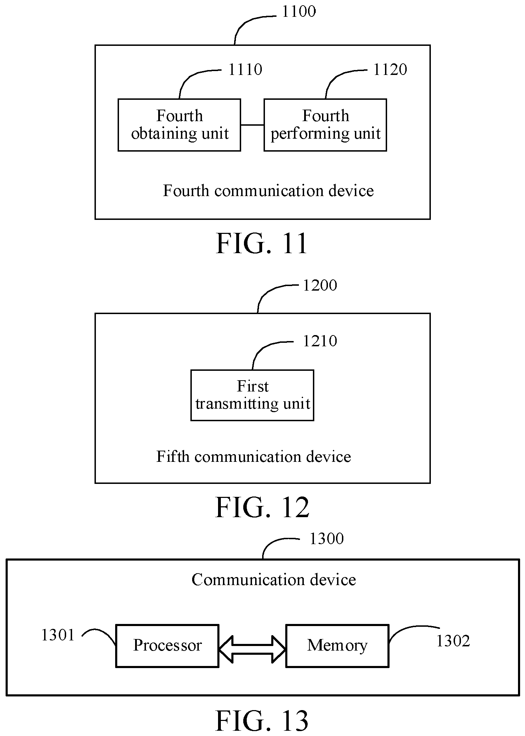

FIG. 11 is a schematic structural diagram of a fourth communication device according to an embodiment of this application. As shown in FIG. 11, the fourth communication device 1100 includes:
a fourth obtaining unit 1110, configured to obtain second information, the second information including at least one of the following: a delay monitoring requirement or a delay monitoring policy, a first QoS requirement or a first QoS policy, and first indication information;
a performing unit 1120, configured to perform a fourth operation according to the second information. The performing a fourth operation includes at least one of the following:
determining first information;
transmitting the first information, where
the first information includes at least one of the following:
delay monitoring configuration information;
first QoS configuration information; and
the first indication information, the first indication information being used to indicate one of the following: performing delay guarantee according to a delay monitoring result and/or the first QoS configuration information; performing delay guarantee according to the delay monitoring result and/or a third round trip delay budget.

The first QoS configuration information includes at least one of the following:
a first round trip delay budget, a first uplink delay budget, and a first downlink delay budget;
a third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate: an uplink delay budget being able to be different from a downlink delay budget, or an uplink delay budget being only able to be the same as a downlink delay budget; and
fourth indication information, the fourth indication information being used to indicate: the first round trip delay being not able to exceed the first round trip delay requirement.

The delay monitoring configuration information includes at least one of the following: a delay required to be measured, including at least one of the following: a first uplink delay, a first downlink delay, a first round trip delay, a second uplink delay, a second downlink delay, and a second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

Optionally, the first QoS requirement includes at least one of the following:
the first QoS requirement, including at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay requirement;
   and/or,
the first QoS policy, including at least one of the following:
a first round trip delay budget;
a first uplink delay budget;
a first downlink delay budget;
a single direction delay budget;
fifth indication information, the fifth indication information being used to indicate one of the following: the first round trip delay budget being a value of twice the single direction delay budget, and the first round trip delay budget being the sum of the first uplink delay requirement and the first downlink delay budget;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay budget.

Optionally, the delay monitoring requirement or the delay monitoring policy includes at least one of the following:
a delay required to be measured, including at least one of the following: a first uplink delay, a first downlink delay, a first round trip delay, a second uplink delay, a second downlink delay, and a second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway, the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

Optionally, the delay required to be measured is one of the following: a delay that the RAN network element is responsible for calculating, and a delay that is measured by the anchor gateway and transmitted to the RAN network element.

Optionally, the first QoS configuration information is one of the following: QoS configuration information of a first data tunnel, and QoS configuration information of a second data tunnel and/or a third data tunnel;
and/or
the delay monitoring configuration information is one of the following: delay monitoring configuration information of the first data tunnel, and delay monitoring configuration information of the second data tunnel and/or the third data tunnel.

The first data tunnel is configured for uplink and/or downlink, the second data tunnel is configured for uplink, and the third data tunnel is configured for downlink.

The fourth communication device according to an embodiment of this application can implement all processes implemented by the method embodiment in FIG. 5 and achieve the same technical solutions. To avoid repetition, details are not described herein again.

FIG. 12 is a schematic structural diagram of a fifth communication device according to an embodiment of this application. As shown in FIG. 12, the fifth communication device 1200 includes:
a first transmitting unit 1210, configured to transmit fifth information, the fifth information including at least one of the following: description information of a first service data flow; a delay monitoring requirement; and a first QoS requirement, the first QoS requirement being a QoS requirement of the first service data flow, where
the first QoS requirement includes at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate: an uplink delay budget being able to be different from a downlink delay budget, or an uplink delay budget being only able to be the same as a downlink delay budget; and
seventh indication information, the seventh indication information being used to indicate: a first round trip delay being not able to exceed the first round trip delay requirement.

The delay monitoring requirement includes at least one of the following:
a delay required to be measured, including at least one of the following: a first uplink delay, a first downlink delay, a first round trip delay, a second uplink delay, a second downlink delay, and a second round trip delay.

The first round trip delay is a round trip delay between a terminal and an anchor gateway,
the second round trip delay is a round trip delay between a RAN network element and the anchor gateway,
the first uplink delay is an uplink delay from the terminal to the anchor gateway, the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

Optionally,
a first uplink delay requirement, used to request to guarantee that a first uplink delay of the first service data flow does not exceed the first uplink delay requirement;
a first downlink delay requirement, used to request to guarantee that a first downlink delay of the first service data flow does not exceed the first downlink delay requirement; and
a first round trip delay requirement, used to request to guarantee that a first round trip delay of the first service data flow does not exceed the first round trip delay requirement.

Optionally,
the first round trip delay requirement is one of the following: a value of twice the single direction delay budget, and a sum of the first uplink delay requirement and the first downlink delay requirement.

The fifth communication device according to an embodiment of this application can implement all processes implemented by the method embodiment in FIG. 6 and achieve the same technical solutions. To avoid repetition, details are not described herein again.

Optionally, as shown in FIG. 13, the embodiments of this application further provide a communication device 1300, including a processor 1301 and a memory 1302. The memory 1302 stores a program or instruction executable on the processor 1301. For example, when the communication device 1300 is a terminal and when the program or the instructions are executed by the processor 1301, various steps of the above QoS control method embodiments are implemented, and the same technical effects can be achieved. When the communication device 1300 is a network side device and when the program or instructions are executed by the processor 1301, various steps of the above QoS control method embodiments are implemented, and the same technical effects can be achieved. To avoid repetition, details are not described herein again.

The embodiments of this application further provide a network side device. The network side device may be a first communication device, a second communication device, a third communication device, a fourth communication device, or a fifth communication device. The network side device includes a processor and a communication interface. The network side device embodiments correspond to the above QoS control method embodiments. Various implementation processes and implementations of the above method embodiments are all applicable to the network side device embodiments, and the same technical effects can be achieved.

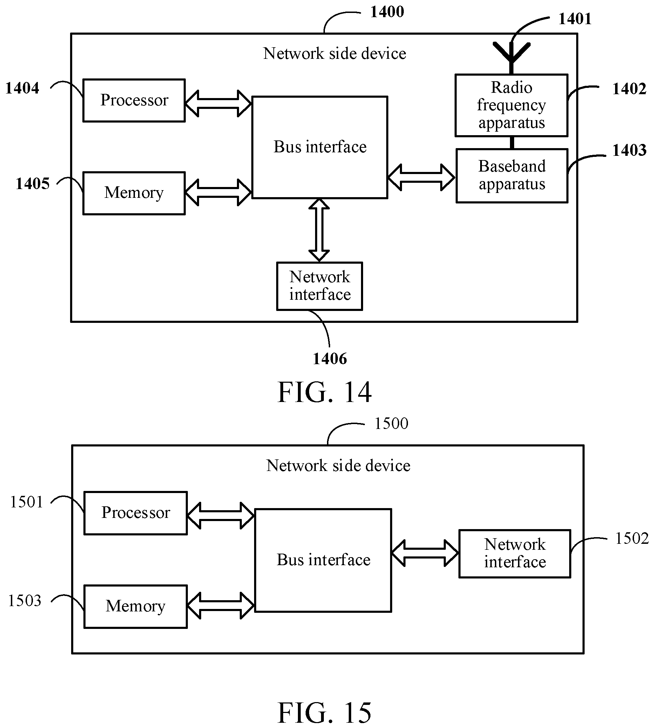

Specifically, the embodiments of this application further provide a network side device. As shown in FIG. 14, the network side device 1400 includes: an antenna 1401, a radio frequency apparatus 1402, a baseband apparatus 1403, a processor 1404, and a memory 1405. The antenna 1401 is connected to the radio frequency device 1402. In an uplink direction, the radio frequency apparatus 1402 receives information through the antenna 1401, and transmits the received information to the baseband apparatus 1403 for processing. In a downlink direction, the baseband apparatus 1403 processes to-be-transmitted information and transmits processed information to the radio frequency apparatus 1402. The radio frequency apparatus 1402 processes received information and transmits processed information through the antenna 1401.

The method performed by the network side device in the above embodiments may be implemented in the baseband apparatus 1403. The baseband apparatus 1403 includes a baseband processor.

The baseband apparatus 1403 may include, for example, at least one baseband board. A plurality of chips are disposed on the baseband board. As shown in FIG. 14, one chip is, for example, a baseband processor, and is connected to the memory 1405 through a bus interface to invoke a program in the memory 1405 to perform network device operations shown in the above method embodiments.

The network side device may further include a network interface 1406. The interface is, for example, a common public radio interface (common public radio interface, CPRI).

Specifically, the network side device 1400 according to the embodiments of the present disclosure further includes: instructions or a program stored in the memory 1405 and executable on the processor 1404. The processor 1404 invokes the instructions or the program in the memory 1405 to perform the method performed by various modules shown in FIG. 8, and achieves the same technical effect. To avoid repetition, details are not described herein again.

Specifically, the embodiments of this application further provide a network side device. As shown in FIG. 15, the network side device 1500 includes: a processor 1501, a network interface 1502, and a memory 1503. The network interface 1502 is, for example, a common public radio interface (common public radio interface, CPRI).

Specifically, the network side device 1500 according to the embodiments of the present disclosure further includes: instructions or a program stored in the memory 1503 and executable on the processor 1501. The processor 1501 invokes the instructions or the program in the memory 1503 to perform the method performed by various modules shown in FIG. 9 to FIG. 12, and achieves the same technical effects. To avoid repetition, details are not described herein again.

The embodiments of this application further provide a readable storage medium. The readable storage medium stores a program or instructions thereon. The program or the instructions, when executed by a processor, implement various processes of the above QoS control method embodiments, and can achieves the same technical effects. To avoid repetition, details are not described herein again.

The processor is a processor in a terminal according to the above embodiments. The readable storage medium includes a computer-readable storage medium, such as a computer read-only memory (ROM), a random access memory (RAM), a magnetic disk, an optical disc, or the like.

The embodiments of this application further provide a chip. The chip includes a processor and a communication interface. The communication interface is coupled to the processor. The processor is configured to run a program or instructions to implement all processes in the above QoS control method embodiments, and can achieve the same technical effects. To avoid repetition, details are not described herein again.

It is to be understood that the chip mentioned in the embodiments of this application may alternatively be referred to as a system-level chip, a system chip, a chip system, a system-on-chip system, and the like.

The embodiments of this application further provide a computer program/a program product. The computer program/the program product is stored in a storage medium. The computer program/the program product is executed by at least one processor to implement all processes of the above QoS control method embodiments, and can achieve the same technical effects. To avoid repetition, details are not described herein again.

The embodiments of this application further provide a communication system, including: a first communication device, a second communication device, a third communication device, a fourth communication device, and a fifth communication device. The first communication device, the second communication device, the third communication device, the fourth communication device, and the fifth communication device may be configured to perform operations of the QoS control method as described above.

It is to be noted that, terms "include", "comprise", or any other variants thereof herein are intended to cover nonexclusive inclusions, so that a process, a method, an article, or an apparatus including a series of elements not only includes those elements but also includes other elements which are not clearly listed or further includes intrinsic elements of the process, the method, the article, or the apparatus. Without more restrictions, elements defined by a statement "include a/an..." do not exclude the existence of additional identical elements in the process, the method, the article, or the apparatus that includes the elements. In addition, it is to be pointed out that the scope of the method and apparatus in the implementations of this application is not limited to performing functions in the order shown or discussed, and may further include performing functions in a substantially simultaneous manner or in a reverse order according to the functions involved. For example, the described methods may be performed in an order different from the described order, and various steps may be added, omitted, or combined. In addition, features described with reference to some examples may be combined in other examples.

According to the description of the above implementations, those who skilled in the art can clearly understand that the method in the above embodiments may be implemented by software in addition to a necessary universal hardware platform or by hardware only. In most cases, the former is a more preferred implementation. Based on such an understanding, the technical solutions of this application essentially or a part thereof that contributes to art technologies may be embodied in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods the embodiments of this application.

The embodiments of this application are described above with reference to the accompanying drawings, but this application is not limited to above specific implementations. The above specific implementations are merely illustrative rather than restrictive. Inspired by this application, those who skilled in the art may still make a plurality of forms without departing from the essence of this application and the scope of protection of the claims, which all fall within the protection of this application.

## Claims

1. A QoS control method, comprising:
obtaining, by a first communication device, first information; and
performing, by the first communication device, a first operation according to the first information, wherein
the first information comprises at least one of the following:
delay monitoring configuration information;
first QoS configuration information; and
first indication information, the first indication information being used to indicate one of the following: performing delay guarantee according to a delay monitoring result and/or the first QoS configuration information; and performing delay guarantee according to the delay monitoring result and/or a third round trip delay budget; wherein
the performing a first operation comprises at least one of the following:
determining at least one of the following: the third round trip delay budget, a third uplink delay budget, and a third downlink delay budget;
determining a first round trip delay budget as one of the following: a value of twice a delay budget of a data tunnel, a first round trip delay budget in the first QoS configuration information, and a sum of a first uplink delay budget and a first downlink delay budget;
performing a delay monitoring operation; and
performing the delay guarantee according to the delay monitoring result and/or the first QoS configuration information, wherein
the first QoS configuration information comprises at least one of the following:
the first round trip delay budget, the first uplink delay budget, and the first downlink delay budget;
the third round trip delay budget, the third uplink delay budget, and the third downlink delay budget;
the delay budget of the data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate one of the following: an uplink delay budget being able to be different from a downlink delay budget, and an uplink delay budget being only able to be the same as a downlink delay budget;
fourth indication information, the fourth indication information being used to indicate that a round trip delay is not able to exceed a round trip delay budget, wherein
the first round trip delay budget is a round trip delay budget between a terminal and an anchor gateway;
the first uplink delay budget is an uplink delay budget from the terminal to the anchor gateway;
the first downlink delay budget is a downlink delay budget from the anchor gateway to the terminal;
the third uplink delay budget is an uplink delay budget from the terminal to an RAN network element;
the third downlink delay budget is a downlink delay budget from the RAN network element to the terminal; and
the third round trip delay budget is a round trip delay budget between the terminal and the RAN network element.

2. The method according to claim 1, wherein the delay monitoring configuration information comprises:
a delay required to be measured, comprising at least one of the following: a first uplink delay, a first downlink delay, a first round trip delay, a second uplink delay, a second downlink delay, and a second round trip delay,
wherein
the first round trip delay is a round trip delay between the terminal and the anchor gateway,
the second round trip delay is a round trip delay between the RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

3. The method according to claim 2, wherein the delay required to be measured is one of the following: a delay that the RAN network element is responsible for calculating, and a delay that is calculated by the anchor gateway and transmitted from the anchor gateway to the RAN network element.

4. The method according to claim 1 or 2, wherein the first QoS configuration information is one of the following: QoS configuration information of a first data tunnel, and QoS configuration information of a second data tunnel and/or a third data tunnel;
and/or
the delay monitoring configuration information is one of the following: delay monitoring configuration information of the first data tunnel, and delay monitoring configuration information of the second data tunnel and/or the third data tunnel, wherein
the first data tunnel is configured for uplink and/or downlink, the second data tunnel is configured for uplink, and the third data tunnel is configured for downlink.

5. The method according to claim 1, wherein the delay monitoring operation comprises at least one of the following:
an uplink delay monitoring operation, comprising at least one of the following: a monitoring operation for a first uplink delay; a monitoring operation for a second uplink delay; and a monitoring operation for a third uplink delay;
a downlink delay monitoring operation, comprising at least one of the following: a monitoring operation for a first downlink delay; a monitoring operation for a second downlink delay; and a monitoring operation for a third downlink delay; and
a round trip delay monitoring operation, comprising at least one of the following: a monitoring operation for a first round trip delay, a monitoring operation for a second round trip delay, and a monitoring operation for a third round trip delay,
wherein
the first round trip delay is a round trip delay between the terminal and the anchor gateway,
the second round trip delay is a round trip delay between the RAN network element and the anchor gateway,
the third round trip delay is a round trip delay between the terminal and the RAN network element,
the first uplink delay is an uplink delay from the terminal to the anchor gateway,
the first downlink delay is a downlink delay from the anchor gateway to the terminal,
the second uplink delay is an uplink delay from the RAN network element to the anchor gateway,
the second downlink delay is a downlink delay from the anchor gateway to the RAN,
the third uplink delay is an uplink delay from the terminal to the RAN network element, and
the third downlink delay is a downlink delay from the RAN network element to the terminal.

6. The method according to claim 1, wherein the performing a delay monitoring operation, and/or, the performing delay guarantee according to a delay monitoring result and/or the first QoS configuration information comprises:
performing the delay monitoring operation in a case that a first condition is satisfied, and/or, performing the delay guarantee according to the delay monitoring result and/or the first QoS configuration information, wherein
the first condition comprises at least one of the following:
a first uplink delay exceeding one of the following: the delay budget of the data tunnel, 1/2 the first round trip delay budget, and the first uplink delay budget;
a first downlink delay exceeding one of the following: the delay budget of the data tunnel, 1/2 the first round trip delay budget, and the first downlink delay budget;
a third uplink delay exceeding one of the following: a delay budget between the terminal and the RAN network element of the data tunnel, 1/2 the third round trip delay budget, and the third uplink delay budget; and
a third downlink delay exceeding one of the following: the delay budget between the terminal and the RAN network element of the data tunnel, 1/2 the first round trip delay budget, and the third downlink delay budget.

7. The method according to claim 6, wherein the first condition further comprises at least one of the following:
a sum of the first uplink delay and the first downlink delay not exceeding the first round trip delay budget; and
a sum of the third uplink delay and the third downlink delay not exceeding the third round trip delay budget.

8. The method according to claim 1, wherein the performing delay guarantee according to the delay monitoring result and/or the first QoS configuration information comprises at least one of the following:
determining or adjusting, according to the delay monitoring result and/or the round trip delay budget, at least one of the following: the uplink delay budget, the downlink delay budget, and the third round trip delay budget;
guaranteeing that a first round trip delay does not exceed the first round trip delay budget;
guaranteeing that a first uplink delay does not exceed the first uplink delay budget;
guaranteeing that a first downlink delay does not exceed the first downlink delay budget;
guaranteeing that a third round trip delay does not exceed the third round trip delay budget;
guaranteeing that a third uplink delay does not exceed the third uplink delay budget;
guaranteeing that a third downlink delay does not exceed the third downlink delay budget;
guaranteeing that a second round trip delay does not exceed a second round trip delay budget;
guaranteeing that a second uplink delay does not exceed a second uplink delay budget; and
guaranteeing that a second downlink delay does not exceed a second downlink delay budget,
wherein
the delay monitoring result comprises at least one of the following: an uplink delay monitoring result, a downlink delay monitoring result, and a round trip delay monitoring result; and
the round trip delay budget comprises at least one of the following: the first round trip delay budget, the second round trip delay budget, and the third round trip delay budget.

9. The method according to claim 8, wherein the determining or adjusting the uplink delay budget, the downlink delay budget, and/or the third round trip delay budget according to the delay monitoring result and/or the round trip delay budget comprises at least one of the following:
determining or adjusting the first uplink delay budget and/or the first downlink delay budget according to at least one of the first round trip delay budget, a first round trip delay monitoring result, a first uplink delay monitoring result, and a first downlink delay monitoring result;
determining or adjusting at least one of the third uplink delay budget and the third downlink delay budget according to at least one of the first round trip delay budget, the first round trip delay monitoring result, a second uplink delay monitoring result, a second downlink delay monitoring result, a third uplink delay monitoring result, and a third downlink delay monitoring result; and
determining or adjusting the third round trip delay budget according to at least one of the first round trip delay budget, the first round trip delay monitoring result, a second round trip delay monitoring result, the second uplink delay monitoring result, and the second downlink delay monitoring result.

10. The method according to claim 5, wherein the monitoring operation for the first uplink delay comprises at least one of the following:
recording a T11 time;
recording a T1 time;
determining the third uplink delay;
adding packet header information to a first uplink packet, the packet header information comprising at least one of the following: the T1 time, the T11 time, and the third uplink delay;
transmitting the first uplink packet;
receiving a first downlink packet, packet header information of the first downlink packet comprising at least one of the following: a T2 time, the first uplink delay, the second uplink delay, and the packet header information of the first uplink packet; and
determining the first uplink delay, comprising one of the following: determining the first uplink delay as T2-T 1+the third uplink delay, determining the first uplink delay as T2-T 11, determining the first uplink delay as the second uplink delay+the third uplink delay, and directly obtaining the first uplink delay from the packet header information of the first downlink packet,
wherein
the T11 time is one of the following: a time when the RAN network element schedules a second uplink packet, and a time when the terminal transmits the second uplink packet;
the T1 time is a transmitting time of the first uplink packet; and
the T2 time is a receiving time of the first uplink packet.

11. The method according to claim 5, wherein the monitoring operation for the first downlink delay comprises at least one of the following:
receiving a first downlink packet, packet header information of the first downlink packet comprising: a T3 time;
recording a T4 time;
determining the third downlink delay; and
determining the first downlink delay, comprising: determining the first downlink delay as T4-T3+the third downlink delay,
wherein
the T3 time is a transmitting time of the first downlink packet; and
the T4 time is a receiving time of the first downlink packet.

12. The method according to claim 5, wherein the monitoring operation for the first round trip delay comprises at least one of the following:
recording a T11 time;
recording a T1 time;
determining the third uplink delay;
adding packet header information to a first uplink packet, the packet header information comprising at least one of the following: the T1 time, the T11 time, and the third uplink delay;
transmitting the first uplink packet;
receiving a first downlink packet, packet header information of the downlink packet comprising at least one of the following: a T2 time, a T3 time, the first uplink delay, the second uplink delay, and the packet header information of the first uplink packet; and
determining the first round trip delay, comprising one of the following: determining the first round trip delay as ((T2-T1)+(T4-T3)+the third downlink delay+the third uplink delay), determining the first round trip delay as ((T2-T11)+(T4-T3)+the third downlink delay), determining the first round trip delay as (the second uplink delay+(T4-T3)+the third downlink delay+the third uplink delay), and determining the first round trip delay as (the first uplink delay+(T4-T3)+the third downlink delay),
wherein
the T11 time is one of the following: a time when the RAN network element schedules a second uplink packet from the terminal, and a time when the terminal transmits the second uplink packet;
the T1 time is a transmitting time of the first uplink packet;
the T2 time is a receiving time of the first uplink packet;
the T3 time is a transmitting time of the first downlink packet; and
the T4 time is a receiving time of the first downlink packet.

13. The method according to claim 5, wherein the monitoring operation for the second uplink delay comprises at least one of the following:
recording a T1 time;
adding packet header information to a first uplink packet, the packet header information comprising the T1 time;
transmitting the first uplink packet;
receiving a first downlink packet, packet header information of the first downlink packet comprising at least one of the following: a T2 time, the second uplink delay;
determining the second uplink delay, comprising one of the following: determining the second uplink delay as T2-T1, and reading the second uplink delay from a packet header of the first downlink packet,
wherein
the T1 time is a transmitting time of the first uplink packet; and
the T2 time is a receiving time of the first uplink packet.

14. The method according to claim 5, wherein the monitoring operation for the second downlink delay comprises at least one of the following:
receiving a first downlink packet, packet header information of the first downlink packet comprising a T3 time, and the T3 time being a transmitting time of the first downlink packet;
recording a T4 time, the T4 time being a receiving time of the first downlink packet; and
determining the second downlink delay, comprising: determining the second downlink delay as T4-T3.

15. The method according to claim 5, wherein the monitoring operation for the second round trip delay comprises at least one of the following:
recording a T1 time;
adding packet header information to a first uplink packet, the packet header information comprising at least one of the following: information configured to measure a delay of the first uplink packet, and the T1 time;
transmitting the first uplink packet;
receiving a first downlink packet, packet header information of the first downlink packet comprising at least one of the following: a T2 time, a T3 time, the T1 time, the second uplink delay, and the packet header information of the first uplink packet;
recording a T4 time, the T4 time being a receiving time of the first downlink packet;
determining the second round trip delay, comprising one of the following: determining the second round trip delay as (T4-T3)+(T2-T1), and determining the second round trip delay as (T4-T3)+the second uplink delay,
wherein
the T1 time is a transmitting time of the first uplink packet,
the T2 time is a receiving time of the first uplink packet, and
the T3 time is a transmitting time of the first downlink packet.

16. The method according to claim 8, wherein determining or adjusting at least one of the first uplink delay budget and the first downlink delay budget according to the delay monitoring result and/or the round trip delay budget comprises at least one of the following:
determining the first uplink delay according to a second uplink delay monitoring result and a third uplink delay monitoring result, and determining or adjusting at least one of the first uplink delay budget and the first downlink delay budget according to the first uplink delay and the first round trip delay budget; and
determining the first downlink delay according to a second downlink delay monitoring result and a third downlink delay monitoring result, and determining or adjusting at least one of the first uplink delay budget and the first downlink delay budget according to the first downlink delay and the first round trip delay budget.

17. The method according to claim 8, wherein the determining or adjusting the third round trip delay budget according to the delay monitoring result and/or the round trip delay budget comprises at least one of the following:
determining the third round trip delay budget according to a second round trip delay monitoring result and the first round trip delay budget; and
determining the third uplink delay budget and/or the third downlink delay budget according to the second round trip delay monitoring result and the first round trip delay budget.

18. The method according to claim 8, wherein the guaranteeing that the first round trip delay does not exceed the first round trip delay budget comprises:
a sum of the third uplink delay and the third downlink delay not exceeding a first value, wherein
the first value is a difference between the first round trip delay budget and a second round trip delay monitoring result.

19. The method according to claim 8, wherein the guaranteeing that the first uplink delay does not exceed the first uplink delay budget comprises:
the third uplink delay or the third uplink delay budget not exceeding a second value, wherein
the second value is a difference between the first uplink delay budget and a second uplink delay monitoring result, or a value obtained by subtracting a third uplink delay monitoring result from a difference between the first round trip delay budget and a second round trip delay monitoring result, or a value obtained by subtracting the third uplink delay budget from the difference between the first round trip delay budget and the second round trip delay monitoring result.

20. The method according to claim 8, wherein the guaranteeing that the first downlink delay does not exceed the first downlink delay budget comprises:
the third downlink delay or the third uplink delay budget not exceeding a third value, wherein
the third value is a difference between the first downlink delay budget and a second downlink delay monitoring result, or a value obtained by subtracting a third uplink delay monitoring result from a difference between the first round trip delay budget and a second round trip delay monitoring result, or a value obtained by subtracting the third uplink delay budget from a difference between the first round trip delay budget and the first round trip delay monitoring result.

21. A QoS control method, comprising:
obtaining, by a second communication device, first information; and
performing, by the second communication device, a second operation according to the first information, wherein
the first information comprises at least one of the following:
delay monitoring configuration information;
first QoS configuration information; and
first indication information, the first indication information being used to indicate one of the following: performing delay guarantee according to a delay monitoring result and/or the first QoS configuration information; and performing delay guarantee according to the delay monitoring result and/or a third round trip delay budget; wherein
the second operation comprises a delay monitoring operation, wherein
the first QoS configuration information comprises at least one of the following:
a first round trip delay budget, a first uplink delay budget, and a first downlink delay budget;
the third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being a sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate that a round trip delay is not able to exceed a round trip delay budget.

22. The method according to claim 21, wherein the delay monitoring configuration information comprises:
a delay required to be measured, comprising at least one of the following: a first uplink delay, a first downlink delay, a first round trip delay, a second uplink delay, a second downlink delay, and a second round trip delay, wherein
the first round trip delay is a round trip delay between a terminal and an anchor gateway,
the second round trip delay is a round trip delay between an RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

23. The method according to claim 22, wherein the delay required to be measured is one of the following: a delay that the RAN network element is responsible for calculating, and a delay that is measured by the anchor gateway and transmitted from the anchor gateway to the RAN network element.

24. The method according to claim 21 or 22, wherein the first QoS configuration information is one of the following: QoS configuration information of a first data tunnel, and QoS configuration information of a second data tunnel and/or a third data tunnel;
and/or
the delay monitoring configuration information is one of the following: delay monitoring configuration information of the first data tunnel, and delay monitoring configuration information of the second data tunnel and/or the third data tunnel, wherein
the first data tunnel is configured for uplink and/or downlink, the second data tunnel is configured for uplink, and the third data tunnel is configured for downlink.

25. The method according to claim 21, wherein the delay monitoring operation comprises at least one of the following:
an uplink delay monitoring operation, comprising at least one of the following: a monitoring operation for a first uplink delay; a monitoring operation for a second uplink delay; and a monitoring operation for a third uplink delay;
a downlink delay monitoring operation, comprising at least one of the following: a monitoring operation for a first downlink delay; a monitoring operation for a second downlink delay; and a monitoring operation for a third downlink delay; and
a round trip delay monitoring operation, comprising at least one of the following: a monitoring operation for a first round trip delay, a monitoring operation for a second round trip delay, and a monitoring operation for a third round trip delay, wherein
the first round trip delay is a round trip delay between a terminal and an anchor gateway,
the second round trip delay is a round trip delay between an RAN network element and the anchor gateway,
the third round trip delay is a round trip delay between the terminal and the RAN network element,
the first uplink delay is an uplink delay from the terminal to the anchor gateway,
the first downlink delay is a downlink delay from the anchor gateway to the terminal,
the second uplink delay is an uplink delay from the RAN network element to the anchor gateway,
the second downlink delay is a downlink delay from the anchor gateway to the RAN,
the third uplink delay is an uplink delay from the terminal to the RAN network element, and
the third downlink delay is a downlink delay from the RAN network element to the terminal.

26. The method according to claim 25, wherein the uplink delay monitoring operation, the monitoring operation for the first uplink delay and/or the monitoring operation for the second uplink delay comprises at least one of the following:
recording a T2 time, the T2 time being a time when an uplink packet is received;
receiving a first uplink packet, packet header information of the first uplink packet comprising at least one of the following: a T1 time, a T 11 time, and the third uplink delay;
determining the first uplink delay, comprising one of the following: determining the first uplink delay as T2-T1 1, and determining the first uplink delay as T2-T1+the third uplink delay;
determining the second uplink delay, comprising: determining the second uplink delay as T2-T1;
adding packet header information to a first downlink packet, the packet header information comprising at least one of the following: the T2 time, the first uplink delay, and packet header information of the uplink packet; and
transmitting the first downlink packet,
wherein
the T11 time is one of the following: a time when the RAN network element schedules a second uplink packet, and a time when the terminal transmits the second uplink packet; and
the T1 time is a transmitting time of the uplink packet.

27. The method according to claim 25, wherein the downlink delay monitoring operation, the monitoring operation for the first downlink delay and/or the monitoring operation for the second downlink delay comprises at least one of the following:
adding packet header information to a first downlink packet, packet header information comprising: a T3 time, the T3 time being a transmitting time of the first downlink packet; and
transmitting the first downlink packet.

28. The method according to claim 25, wherein the round trip delay monitoring operation comprises at least one of the following:
recording a T2 time, the T2 time being a time when a first uplink packet is received;
receiving the first uplink packet, packet header information of the first uplink packet comprising at least one of the following: a T1 time, a T11 time, and the third uplink delay;
determining the first uplink delay, comprising one of the following: determining the first uplink delay as T2-T1 1, and determining the first uplink delay as T2-T1+the third uplink delay;
adding at least one of the following pieces of packet header information to the first downlink packet: a T3 time, the T2 time, the first uplink delay, the second uplink delay, and the packet header information of the first uplink packet; and
transmitting the first downlink packet, wherein
the T3 time is a transmitting time of the first downlink packet;
the T11 time is one of the following: a time when the RAN network element schedules a second uplink packet, and a time when the terminal transmits the second uplink packet; and
the T1 time is a transmitting time of the first uplink packet.

29. A QoS control method, comprising:
obtaining, by a third communication device, fifth information; and
performing, by the third communication device, a third operation according to the fifth information; wherein
the performing a third operation comprises at least one of the following:
determining second information;
transmitting the second information,
wherein
the second information comprises at least one of the following: a delay monitoring policy, a first QoS policy, and first indication information;
the first indication information is used to indicate one of the following: performing delay guarantee according to a delay monitoring result and/or first QoS configuration information; and performing delay guarantee according to the delay monitoring result and/or a third round trip delay budget, wherein
the fifth information comprises at least one of the following: description information of a first service data flow; a delay monitoring requirement; and a first QoS requirement, the first QoS requirement being a QoS requirement of the first service data flow, wherein
the first QoS requirement comprises at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate one of the following: an uplink delay budget being able to be different from a downlink delay budget, and an uplink delay budget being only able to be the same as a downlink delay budget; and
seventh indication information, the seventh indication information being used to indicate that a first round trip delay is not able to exceed the first round trip delay requirement.

30. The method according to claim 29, wherein determining, by the third communication device, the second information according to the fifth information comprises:
in a case that the fifth information comprises the first uplink delay requirement and the first downlink delay requirement, mapping, by the third communication device, a first uplink QoS requirement or a first uplink QoS budget according to the first uplink delay requirement, and mapping, by the third communication device, a first downlink QoS requirement or a first downlink QoS budget according to the first downlink delay requirement; and
in a case that the fifth information comprises the first round trip delay requirement, segmenting, by the third communication device, the first round trip delay requirement or a first round trip delay budget according to a preconfigured first round trip delay segmentation experience value or the delay monitoring result, to obtain a first uplink QoS requirement or a first uplink QoS budget, and obtain a first downlink QoS requirement or a first downlink QoS budget.

31. The method according to claim 29, wherein the first QoS policy comprises at least one of the following:
a first round trip delay budget;
a first uplink delay budget;
a first downlink delay budget;
the single direction delay budget;
fifth indication information, the fifth indication information being used to indicate one of the following: the first round trip delay budget being a value of twice the single direction delay budget, and the first round trip delay budget being a sum of the first uplink delay requirement and the first downlink delay budget;
sixth indication information, the sixth indication information being used to indicate one of the following: an uplink delay budget being able to be different from a downlink delay budget, and an uplink delay budget being only able to be the same as a downlink delay budget; and
seventh indication information, the seventh indication information being used to indicate that the first round trip delay is not able to exceed the first round trip delay budget.

32. The method according to claim 29, wherein the delay monitoring policy comprises at least one of the following:
a delay required to be measured, comprising at least one of the following: a first uplink delay, a first downlink delay, the first round trip delay, a second uplink delay, a second downlink delay, and a second round trip delay,
wherein
the first round trip delay is a round trip delay between a terminal and an anchor gateway,
the second round trip delay is a round trip delay between an RAN network element and the anchor gateway,
the first uplink delay is an uplink delay from the terminal to the anchor gateway, the first downlink delay is a downlink delay from the anchor gateway to the terminal,
the second uplink delay is an uplink delay from the RAN network element to the anchor gateway, and
the second downlink delay is a downlink delay from the anchor gateway to the RAN network element.

33. The method according to claim 32, wherein the delay required to be measured is one of the following: a delay that the RAN network element is responsible for calculating, and a delay that is measured by the anchor gateway and transmitted from the anchor gateway to the RAN network element.

34. The method according to claim 31 or 32, wherein the first QoS policy is one of the following: a QoS policy of a first data tunnel, a QoS policy of a second data tunnel and/or a third data tunnel, and a QoS policy of the first service data flow;
and/or
the delay monitoring policy is one of the following: a delay monitoring policy of the first data tunnel, and a delay monitoring policy of the second data tunnel and/or the third data tunnel, wherein
the first data tunnel is configured for uplink and/or downlink, the second data tunnel is configured for uplink, and the third data tunnel is configured for downlink.

35. A QoS control method, comprising:
obtaining, by a fourth communication device, second information, the second information comprising at least one of the following: a delay monitoring requirement or a delay monitoring policy, a first QoS requirement or a first QoS policy, and first indication information;
performing, by the fourth communication device, a fourth operation according to the second information, wherein
the performing a fourth operation comprises at least one of the following:
determining first information;
transmitting the first information, wherein
the first information comprises at least one of the following:
delay monitoring configuration information;
first QoS configuration information; and
first indication information, the first indication information being used to indicate one of the following: performing delay guarantee according to a delay monitoring result and/or the first QoS configuration information; and performing delay guarantee according to the delay monitoring result and/or a third round trip delay budget,
wherein
the first QoS configuration information comprises at least one of the following:
a first round trip delay budget, a first uplink delay budget, and a first downlink delay budget;
the third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being a sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate that a first round trip delay is not able to exceed a first round trip delay requirement,
wherein
the delay monitoring configuration information comprises a delay required to be measured, the delay required to be measured comprising at least one of the following: a first uplink delay, a first downlink delay, the first round trip delay, a second uplink delay, a second downlink delay, and a second round trip delay,
wherein
the first round trip delay is a round trip delay between a terminal and an anchor gateway,
the second round trip delay is a round trip delay between an RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

36. The method according to claim 35, wherein the first QoS requirement comprises at least one of the following:
the first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate one of the following: an uplink delay budget being able to be different from a downlink delay budget, or an uplink delay budget being only able to be the same as a downlink delay budget; and
seventh indication information, the seventh indication information being used to indicate that the first round trip delay is not able to exceed the first round trip delay requirement,
and/or,
the first QoS policy comprises at least one of the following:
the first round trip delay budget;
the first uplink delay budget;
the first downlink delay budget;
the single direction delay budget;
fifth indication information, the fifth indication information being used to indicate one of the following: the first round trip delay budget being a value of twice the single direction delay budget, and the first round trip delay budget being a sum of the first uplink delay requirement and the first downlink delay budget;
sixth indication information, the sixth indication information being used to indicate one of the following: an uplink delay budget being able to be different from a downlink delay budget, and an uplink delay budget being only able to be the same as a downlink delay budget; and
seventh indication information, the seventh indication information being used to indicate that the first round trip delay is not able to exceed the first round trip delay budget.

37. The method according to claim 35, wherein the delay monitoring requirement or the delay monitoring policy comprises a delay required to be measured, the delay required to be measured comprising at least one of the following: the first uplink delay, the first downlink delay, the first round trip delay, the second uplink delay, the second downlink delay, and the second round trip delay,
wherein
the first round trip delay is the round trip delay between the terminal and the anchor gateway,
the second round trip delay is the round trip delay between the RAN network element and the anchor gateway,
the first uplink delay is the uplink delay from the terminal to the anchor gateway,
the first downlink delay is the downlink delay from the anchor gateway to the terminal,
the second uplink delay is the uplink delay from the RAN network element to the anchor gateway, and
the second downlink delay is the downlink delay from the anchor gateway to the RAN.

38. The method according to claim 37, wherein the delay required to be measured is one of the following: a delay that the RAN network element is responsible for calculating, and a delay that is measured by the anchor gateway and transmitted from the anchor gateway to the RAN network element.

39. The method according to claim 36 or 37, wherein the first QoS configuration information is one of the following: QoS configuration information of a first data tunnel, and QoS configuration information of a second data tunnel and/or a third data tunnel;
and/or
the delay monitoring configuration information is one of the following: delay monitoring configuration information of the first data tunnel, and delay monitoring configuration information of the second data tunnel and/or the third data tunnel, wherein
the first data tunnel is configured for uplink and/or downlink, the second data tunnel is configured for uplink, and the third data tunnel is configured for downlink.

40. A QoS control method, comprising:
transmitting, by a fifth communication device, fifth information, the fifth information comprising at least one of the following: description information of a first service data flow; a delay monitoring requirement; and a first QoS requirement, the first QoS requirement being a QoS requirement of the first service data flow, wherein
the first QoS requirement comprises at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate one of the following: an uplink delay budget being able to be different from a downlink delay budget, and an uplink delay budget being only able to be the same as a downlink delay budget; and
seventh indication information, the seventh indication information being used to indicate that a first round trip delay is not able to exceed the first round trip delay requirement, wherein
the delay monitoring requirement comprises a delay required to be measured, the delay required to be measured comprising at least one of the following: a first uplink delay, a first downlink delay, the first round trip delay, a second uplink delay, a second downlink delay, and a second round trip delay,
wherein
the first round trip delay is a round trip delay between a terminal and an anchor gateway,
the second round trip delay is a round trip delay between an RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

41. The method according to claim 40, wherein
the first uplink delay requirement is used to request to guarantee that a first uplink delay of the first service data flow does not exceed the first uplink delay requirement;
the first downlink delay requirement is used to request to guarantee that a first downlink delay of the first service data flow does not exceed the first downlink delay requirement; and
the first round trip delay requirement is used to request to guarantee that a first round trip delay of the first service data flow does not exceed the first round trip delay requirement.

42. The method according to claim 40, wherein
the first round trip delay requirement is one of the following: the value of twice the single direction delay budget, and the sum of the first uplink delay requirement and the first downlink delay requirement.

43. A communication device, the communication device being a first communication device, comprising:
a first obtaining unit, configured to obtain first information;
a first performing unit, configured to perform a first operation according to the first information, wherein
the first information comprises at least one of the following:
delay monitoring configuration information;
first QoS configuration information; and
first indication information, the first indication information being used to indicate one of the following: performing delay guarantee according to a delay monitoring result and/or the first QoS configuration information; and performing delay guarantee according to the delay monitoring result and/or a third round trip delay budget, wherein
performing the first operation comprises at least one of the following:
determining at least one of the following: the third round trip delay budget, a third uplink delay budget, and a third downlink delay budget;
determining a first round trip delay budget as one of the following: a value of twice a delay budget of a data tunnel, a first round trip delay budget in the first QoS configuration information, and a sum of a first uplink delay budget and a first downlink delay budget;
performing a delay monitoring operation; and
performing the delay guarantee according to the delay monitoring result and/or the first QoS configuration information, wherein
the first QoS configuration information comprises at least one of the following:
the first round trip delay budget, a first uplink delay budget, and a first downlink delay budget;
the third round trip delay budget, a third uplink delay budget, and the third downlink delay budget;
the delay budget of the data tunnel;
second indication information, the second indication information being used to indicate one of the following: the first round trip delay budget being a value of twice the delay budget of the data tunnel, and the first round trip delay budget being the sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate that a round trip delay is not able to exceed a round trip delay budget, wherein
the first round trip delay budget is a round trip delay budget between a terminal and an anchor gateway;
the first uplink delay budget is an uplink delay budget from the terminal to the anchor gateway;
the first downlink delay budget is a downlink delay budget from the anchor gateway to the terminal;
the third uplink delay budget is an uplink delay budget from the terminal to an RAN network element;
the third downlink delay budget is a downlink delay budget from the RAN network element to the terminal; and
the third round trip delay budget is a round trip delay budget between the terminal and the RAN network element.

44. A communication device, the communication device being a second communication device, comprising:
a second obtaining unit, configured to obtain first information;
a second performing unit, configured to perform a second operation according to the first information, wherein
the first information comprises at least one of the following:
delay monitoring configuration information;
first QoS configuration information; and
first indication information, the first indication information being used to indicate one of the following: performing delay guarantee according to a delay monitoring result and/or the first QoS configuration information; and performing delay guarantee according to the delay monitoring result and/or a third round trip delay budget; wherein
the second operation comprises a delay monitoring operation, wherein
the first QoS configuration information comprises at least one of the following:
a first round trip delay budget, a first uplink delay budget, and a first downlink delay budget;
the third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being a sum of the first uplink delay budget and the first downlink delay budget;
third indication information, the third indication information being used to indicate one of the following: an uplink delay budget being able to be different from a downlink delay budget, or an uplink delay budget being only able to be the same as a downlink delay budget; and
fourth indication information, the fourth indication information being used to indicate that a round trip delay is not able to exceed a round trip delay budget.

45. A communication device, the communication device being a third communication device, comprising:
a third obtaining unit, configured to obtain fifth information; and
a third performing unit, configured to perform a third operation according to the fifth information; wherein
performing the third operation comprises at least one of the following:
determining second information; and
transmitting the second information,
wherein
the second information comprises at least one of the following: a delay monitoring policy, a first QoS policy, and first indication information;
the first indication information is used to indicate one of the following: performing delay guarantee according to a delay monitoring result and/or first QoS configuration information; and performing delay guarantee according to the delay monitoring result and/or a third round trip delay budget, wherein
the fifth information comprises at least one of the following: description information of a first service data flow; a delay monitoring requirement; and a first QoS requirement, the first QoS requirement being a QoS requirement of the first service data flow, wherein
the first QoS requirement comprises at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate one of the following: an uplink delay budget being able to be different from a downlink delay budget, and an uplink delay budget being only able to be the same as a downlink delay budget; and
seventh indication information, the seventh indication information being used to indicate that a first round trip delay is not able to exceed the first round trip delay requirement.

46. A communication device, the communication device being a fourth communication device, comprising:
a fourth obtaining unit, configured to obtain second information, the second information comprising at least one of the following: a delay monitoring requirement or a delay monitoring policy, a first QoS requirement or a first QoS policy, and first indication information;
a fourth performing unit, configured to perform a fourth operation according to the second information, wherein
performing the fourth operation comprises at least one of the following:
determining first information; and
transmitting the first information, wherein
the first information comprises at least one of the following:
delay monitoring configuration information;
first QoS configuration information; and
first indication information, the first indication information being used to indicate one of the following: performing delay guarantee according to a delay monitoring result and/or the first QoS configuration information; and performing delay guarantee according to the delay monitoring result and/or a third round trip delay budget,
wherein
the first QoS configuration information comprises at least one of the following:
a first round trip delay budget, a first uplink delay budget, and a first downlink delay budget;
the third round trip delay budget, a third uplink delay budget, and a third downlink delay budget;
a delay budget of a data tunnel;
second indication information, the second indication information being used to indicate one of the following: the first round trip delay budget being a value of twice the delay budget of the data tunnel, and the first round trip delay budget being a sum of the first uplink delay budget and the first downlink delay budget;
third indication information, the third indication information being used to indicate one of the following: an uplink delay budget being able to be different from a downlink delay budget, and an uplink delay budget being only able to be the same as a downlink delay budget;
fourth indication information, the fourth indication information being used to indicate that a first round trip delay is not able to exceed the first round trip delay requirement,
wherein
the delay monitoring configuration information comprises a delay required to be measured, the delay required to be measured comprising at least one of the following: a first uplink delay, a first downlink delay, the first round trip delay, a second uplink delay, a second downlink delay, and a second round trip delay,
wherein
the first round trip delay is a round trip delay between a terminal and an anchor gateway,
the second round trip delay is a round trip delay between an RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

47. A communication device, the communication device being a fifth communication device, comprising:
a first transmitting unit, configured to transmit fifth information, the fifth information comprising at least one of the following: description information of a first service data flow; a delay monitoring requirement; and a first QoS requirement, the first QoS requirement being a QoS requirement of the first service data flow, wherein
the first QoS requirement comprises at least one of the following:
a first round trip delay requirement;
a first uplink delay requirement;
a first downlink delay requirement;
a single direction delay budget;
fifth indication information, the fifth indication information being used to indicate one of the following: the first round trip delay requirement being a value of twice the single direction delay budget, and the first round trip delay requirement being a sum of the first uplink delay requirement and the first downlink delay requirement;
sixth indication information, the sixth indication information being used to indicate one of the following: an uplink delay budget being able to be different from a downlink delay budget, and an uplink delay budget being only able to be the same as a downlink delay budget; and
seventh indication information, the seventh indication information being used to indicate that a first round trip delay is not able to exceed the first round trip delay requirement, wherein
the delay monitoring requirement comprises a delay required to be measured, the delay required to be measured comprising at least one of the following: a first uplink delay, a first downlink delay, the first round trip delay, a second uplink delay, a second downlink delay, and a second round trip delay,
wherein
the first round trip delay is a round trip delay between a terminal and an anchor gateway,
the second round trip delay is a round trip delay between an RAN network element and the anchor gateway,
the first uplink delay is an uplink delay from the terminal to the anchor gateway,
the first downlink delay is a downlink delay from the anchor gateway to the terminal,
the second uplink delay is an uplink delay from the RAN network element to the anchor gateway, and
the second downlink delay is a downlink delay from the anchor gateway to the RAN.

48. A communication device, comprising a processor, a memory, and a computer program stored on the memory and executable on the processor, the computer program, when executed by the processor, implementing steps of the QoS control method according to any one of claims 1 to 20, or, implementing steps of the QoS control method according to any one of claims 21 to 28, or, implementing steps of the QoS control method according to any one of claims 29 to 34, or, implementing steps of the QoS control method according to any one of claims 35 to 39, or, implementing steps of the QoS control method according to any one of claims 40 to 42.

49. A readable storage medium, the readable storage medium storing a program or instructions thereon, the program or instructions, when executed by a processor, implementing steps of the QoS control method according to any one of claims 1 to 20, or, implementing steps of the QoS control method according to any one of claims 21 to 28, or, implementing steps of the QoS control method according to any one of claims 29 to 34, or, implementing steps of the QoS control method according to any one of claims 35 to 39, or, implementing steps of the QoS control method according to any one of claims 40 to 42.
